# EUROPÄISCHE PATENTSCHRIFT

(11) **EP 3 037 800 B1**
(45) Veröffentlichungstag und Bekanntmachung des Hinweises auf die Patenterteilung: **04.04.2018**
(21) Anmeldenummer: 14004425.6
(22) Anmeldetag: 24.12.2014
(51) Int. Cl.: G01M 11/02, G01B 11/255

(54) **Messung der Positionen von Krümmungsmittelpunkten optischer Flächen eines ein-oder mehrlinsigen optischen Systems**
Measurement of the positions of curvature midpoints of optical areas of a single or multi-lens optical system
Mesure des positions de centres de courbures de surfaces optiques d'un système optique à une ou à plusieurs lentilles

(43) Veröffentlichungstag der Anmeldung: 29.06.2016
(73) Patentinhaber: Trioptics GmbH, 22880 Wedel (DE)
(72) Erfinder: Oya, Naoji, Shizuoka-City, Shizuoka, 422-8041 (JP); Ruprecht, Aiko, 22605 Hamburg (DE); Dumitrescu, Eugen, 22880 Wedel (DE)
(74) Vertreter: Ostertag & Partner Patentanwälte mbB

(56) Entgegenhaltungen:
- WO-A1-2006/125609
- DE-A1-102013 001 458
- US-A1- 2005 128 468

## Beschreibung

### HINTERGRUND DER ERFINDUNG

### 1. Gebiet der Erfindung

Die Erfindung betrifft ein Verfahren und eine Vorrichtung zur Messung der Positionen von Krümmungsmittelpunkten optischer Flächen eines ein- oder mehrlinsigen optischen Systems.

### 2. Beschreibung des Standes der Technik

Bei der Fertigung von qualitativ hochwertigen mehrlinsigen optischen Systemen müssen die Linsen mit hoher Genauigkeit zueinander ausgerichtet werden. Um eine solche Ausrichtung durchführen zu können, ist es erforderlich, die Positionen der optischen Flächen messtechnisch zu bestimmen. Selbst wenn während der Justierung der Linsen auf eine Überprüfung der Positionsgenauigkeit verzichtet wird, so werden solche Messungen zumindest im Rahmen der Qualitätskontrolle regelmäßig durchgeführt.

Eine entscheidende geometrische Größe bei der Vermessung mehrlinsiger optischer Systeme sind die Positionen der Krümmungsmittelpunkte der optischen Flächen. Idealerweise liegen die Krümmungsmittelpunkte exakt auf einer gemeinsamen Referenzachse, die in der Regel mit den Symmetrieachsen der die Linsen aufnehmenden Linsenfassungen zusammenfallen sollte. In realen optischen Systemen liegen die Krümmungsmittelpunkte jedoch infolge von Fertigungs- und Montagetoleranzen statistisch um diese Referenzachse herum verteilt. Sind die Abstände der Krümmungsmittelpunkte von der Referenzachse zu groß, so verschlechtern sich die Abbildungseigenschaften des optischen Systems in untolerierbarer Weise.

Aus der DE 10 2004 029 735 A1 ist ein Verfahren zur Messung von Krümmungsmittelpunkten optischer Flächen eines mehrlinsigen optischen Systems bekannt, bei dem die Positionen der Krümmungsmittelpunkte der einzelnen optischen Flächen sukzessive mit Hilfe eines Autokollimators gemessen werden. Für jede optische Fläche wird die Messung dabei vorzugsweise mehrfach in unterschiedlichen azimutalen Drehstellungen des optischen Systems durchgeführt. Die erste Fläche, für welche die Position des Krümmungsmittelpunkts vermessen wird, ist diejenige Fläche, die dem Autokollimator am nächsten liegt. Sobald die Position des Krümmungsmittelpunkts dieser ersten Fläche bestimmt wurde, wird die darauf folgende zweite Fläche vermessen. Die erste Fläche beeinflusst allerdings die Vermessung der zweiten Fläche. Deswegen muss die optische Wirkung der ersten Fläche bei der Bestimmung der Position des Krümmungsmittelpunkts der zweiten Fläche rechnerisch berücksichtigt werden. Bei der Berücksichtigung der optischen Wirkung der ersten Fläche wird auf die Designdaten der ersten Fläche zurückgegriffen, und zwar insbesondere auf den Soll-Krümmungsradius und den Soll-Abstand zur zweiten Fläche (d. h. der Mittendicke der ersten Linse). Rechnerisch berücksichtigt wird außerdem die zuvor gemessene Position des Krümmungsmittelpunkts der ersten Fläche.

Bei allen weiteren Flächen wird in gleicher Weise vorgegangen. Bei der rechnerischen Auswertung werden somit stets die gemessenen Positionen der Krümmungsmittelpunkte aller vorausliegenden optischen Flächen und ansonsten die Designdaten berücksichtigt.

Bei diesem bekannten Verfahren muss sich der Krümmungsmittelpunkt einer zu vermessenden optischen Fläche stets in der Bildebene des Autokollimators befinden, wobei die brechende Wirkung von ggf. im Strahlengang vorgelagerten optischen Flächen des optischen Systems zu berücksichtigen ist. Auf diese Weise ist sichergestellt, dass das Messlicht senkrecht auf die zu vermessende optische Fläche fällt und in sich zurückreflektiert wird. Nur dann wird das Messobjekt des Autokollimators, bei dem es sich z.B. um ein Strichkreuz handeln kann, scharf auf einen ortsauflösenden Lichtsensor des Autokollimators abgebildet. Nach jeder Messung der Position eines Krümmungsmittelpunkts muss deswegen die Brennweite des Autokollimators neu eingestellt werden. Im Allgemeinen erfolgt dies durch Verschieben einer oder mehrerer Linsen entlang der optischen Achse des Autokollimators.

Insbesondere bei industriellen Messaufgaben, bei denen sehr viele optische Systeme gleicher Art in kurzer Zeit vermessen werden sollen, entfällt ein beträchtlicher Teil der Gesamtmesszeit auf diese immer wieder durchzuführende Einstellung der Brennweite.

Ähnliche Probleme entstehen auch bei der Messung der beiden Krümmungsmittelpunkte einer einzelnen Linse, z.B. um daraus ihre optische Achse zu bestimmen. Auch dort muss die Brennweite bei jedem Messvorgang einmal verstellt werden.

Aus einem Aufsatz von R. E. Parks mit dem Titel "Lens centering using the Point Source Microscope", Proc. SPIE, Vol. 6676, Optical System Alignment and Tolerancing, article id. 667603 (September 12, 2007), doi: 10.1117/12.726837, ist ein Messverfahren bekannt, bei dem die Strahlengänge von zwei voneinander unabhängigen Punktquellenmikroskopen (*Point Source Microscope,* PSM) mit Hilfe von Strahlteilern überlagert werden. Auf diese Weise kann die optische Achse einer einzelnen Linse sehr rasch und ohne Linsen verfahren zu müssen bestimmt werden. Es ist hierzu lediglich sicherzustellen, dass die Brennweiten der Punktquellenmikroskope vorab so eingestellt wurden, dass die erwarteten Positionen der Krümmungsmittelpunkte in den Brennebenen liegen. Die Messung wird dabei für jede optische Fläche in mehreren azimutalen Drehstellungen durchgeführt, um Messfehler zu verringern.

Nachteilig bei diesem bekannten Messverfahren ist jedoch, dass der apparative Aufbau infolge der Bereitstellung zweier vollständiger Punktquellenmikroskope relativ hoch ist. Vor allem dann, wenn nicht nur zwei, sondern drei oder mehr optische Flächen ohne mechanische Verfahrvorgänge vermessen werden sollen, ist dieser Ansatz aus Kostengründen nicht wirtschaftlich.

Aus der DE 10 2013 001 458 A1 ist ein Messsystem bekannt, bei dem sich die Brennweite des Autokollimators mit Hilfe einer elektrischen Linse sehr schnell verändern lässt.

Bei dem aus der WO 2006/125609 A1 bekannten Messsystem wird mit Hilfe eines als LCD-Panel ausgebildeten Raumlichtmodulators das Messlicht auf die Krümmungsmittelpunkte unterschiedlicher Flächen fokussiert.

Die US 2005/128468 A1 beschreibt ein Messsystem, bei dem Linsen ausgetauscht werden, um das Messlicht auf die Krümmungsmittelpunkte unterschiedlicher optischer Flächen richten zu können.

### ZUSAMMENFASSUNG DER ERFINDUNG

Aufgabe der vorliegenden Erfindung ist es deswegen, ein Verfahren anzugeben, mit dem sich die Positionen von Krümmungsmittelpunkten optischer Flächen eines ein- oder mehrlinsigen optischen Systems sehr schnell, aber mit einem geringen apparativen Aufwand genau messen lassen. Aufgabe der Erfindung ist es außerdem, eine Vorrichtung anzugeben, mit der sich ein solches Verfahren durchführen lässt.

Hinsichtlich des Verfahrens wird diese Aufgabe gelöst durch ein Verfahren zur Messung der Positionen von Krümmungsmittelpunkten optischer Flächen eines ein- oder mehrlinsigen optischen Systems, das die folgenden Schritte umfasst:
a) Bereitstellen einer Abbildungsoptik, die mindestens eine, und vorzugsweise genau eine, Objektebene in eine erste und gleichzeitig eine davon verschiedene, aber sich im gleichen Strahlengang befindende zweite Bildebene abbildet;
b) Anordnen des optischen Systems derart, dass sich, unter Berücksichtigung der brechenden Wirkung einer gegebenenfalls im Strahlengang vorgelagerten optischen Fläche des optischen Systems, eine vermutete Position eines ersten Krümmungsmittelpunkts in der ersten Bildebene und eine vermutete Position eines zweiten Krümmungsmittelpunkts in der zweiten Bildebene der Abbildungsoptik befindet;
c) Gleichzeitiges oder sequentielles Abbilden eines in der Objektebene angeordneten Objekts auf die erste und auf die zweite Bildebene mit Hilfe von Messlicht, das von einer Seite auf das optische System fällt;
d) Erfassen von Reflexen des Messlichts an optischen Flächen des optischen Systems mit Hilfe eines ortsauflösenden Lichtsensors;
e) Berechnen der tatsächlichen Position des ersten und des zweiten Krümmungsmittelpunktes auf der Grundlage der in Schritt d) erfassten Reflexe.

Die Erfindung beruht auf der Überlegung, dass man zur schnellen Vermessung der Positionen von Krümmungsmittelpunkten von zwei oder mehr optischen Flächen nicht mehrere Abbildungsoptiken benötigt, die voneinander vollständig unabhängig sind. Wenn eine erfindungsgemäße Abbildungsoptik verwendet wird, die durch räumlich, wellenlängenmäßig oder polarisationsmäßig getrennte Anteile des Messlichts mehrere, im Allgemeinen optisch nicht konjugierte Bildebenen im gleichen Strahlengang erzeugt, lassen sich bei geringem konstruktiven Aufwand Verfahrbewegungen von optischen Elementen vermeiden. Dies ist Voraussetzung für eine schnelle Messung, da Verfahrbewegungen in der Regel keine schnelle Messung der Krümmungsmittelpunkte zulassen.

Vor der eigentlichen Messung muss die Lage der Bildebenen an die vermuteten Positionen der Krümmungsmittelpunkte angepasst werden. Nach dieser Anpassung können gleichartige optische Systeme in großer Zahl sehr rasch vermessen werden, weil nach der einmaligen Einstellung oder Auslegung der Abbildungsoptik keine Linsen oder andere optische Elemente in der Abbildungsoptik in axialer Richtung verfahren werden müssen.

Der ortsauflösende Lichtsensor befindet sich vorzugsweise, sofern sich in der ersten oder in der zweiten Bildebene eine reflektierende Fläche befindet, in einer weiteren Bildebene, die zu der ersten und der zweiten Bildebene optisch konjugiert ist.

Im Allgemeinen genügt es, wenn nur ein einziger Lichtsensor vorgesehen ist. Dieser Lichtsensor erfasst dann gleichzeitig die Reflexe von mehreren optischen Flächen. Diese Reflexe lassen sich im Allgemeinen durch einfache Maßnahmen voneinander unterscheiden, auf die weiter unten näher eingegangen wird. Im Prinzip können jedoch auch mehrere Lichtsensoren vorgesehen sein, um z.B. die räumlich, wellenlängenmäßig oder polarisationsmäßig getrennten Anteile des Messlichts getrennt zu erfassen. Diese Lichtsensoren sind dann vorzugsweise an optisch einander entsprechenden Positionen angeordnet. Insbesondere können die Lichtsensoren optisch gleich weit von der Abbildungsoptik entfernt angeordnet sein. Unter "optisch gleich weit" wird hier verstanden, dass die optische Weglänge, die im Gegensatz zur geometrischen Weglänge die Brechzahlen der durchtretenden Medien berücksichtigt, für alle Abstände zwischen der Abbildungsoptik einerseits und den Lichtsensoren andererseits, gleich sind.

Entsprechendes gilt auch für das Objekt. Auch hier genügt es im Allgemeinen, wenn nur eine einzige Objektebene vorgesehen ist, in der sich ein Objekt befindet. Die Aufteilung des Messlichts in mehrere räumlich, wellenlängenmäßig oder polarisationsmäßig getrennte Anteile erfolgt dann erst später im Strahlengang. Es ist aber auch möglich, mehrere Objektebenen vorzusehen, die den besagten Anteilen des Messlichts zugeordnet sein können. Auch hier ist es in der Regel zweckmäßig, wenn die Objektebenen sich an optisch einander entsprechenden Positionen befinden. Insbesondere können sie optisch gleich weit von der Abbildungsoptik entfernt angeordnet sein.

In der Regel ist es sinnvoll, wenn bei der Messung der Position eines Krümmungsmittelpunkts einer innerhalb des optischen Systems liegenden Fläche die gemessenen Positionen der Krümmungsmittelpunkte der zwischen dieser Fläche und der Abbildungsoptik liegenden Flächen rechnerisch berücksichtigt werden, wie dies an sich im Stand der Technik bekannt ist. Gelegentlich kann auf eine solche Berücksichtigung jedoch verzichtet werden, etwa wenn die Brechung an den vorausliegenden Flächen wegen kleiner Krümmungen oder kleiner Brechzahldifferenzen sehr gering ist, oder wenn das erfindungsgemäße Verfahren nur zur qualitativen Messung der Positionen der Krümmungsmittelpunkte verwendet wird.

Bei herkömmlichen Messverfahren wird das zu vermessende optische System um eine genau bestimmte Drehachse gedreht. Diese Drehachse stellt eine für alle optischen Flächen gemeinsame Referenzachse dar, deren Lage genau bekannt ist. Dadurch lassen sich intrinsische Messfehler, die z.B. auf Abbildungsfehler der Abbildungsoptik zurückgehen können, eliminieren.

Auf eine Drehung des zu vermessenden optischen Systems kann verzichtet werden, wenn vor der Messung der Krümmungsmittelpunkte eine Kalibriermessung durchgeführt wird, aus der eine Zuordnung von Orten auf dem Lichtsensor zu Krümmungsmittelpunkten abgeleitet wird. Auf diese Weise lassen sich Abbildungsfehler der Abbildungsoptik und Justagetoleranzen anderer Komponenten des Messaufbaus berücksichtigen. Bei der Messung der Positionen der Krümmungsmittelpunkte werden dann während der Schritte c) und d) keinerlei Bauteile axial verfahren. Dadurch lässt sich der gesamte Messvorgang extrem schnell durchführen. Das Verfahren lässt sich dadurch auch im Zusammenhang mit der Justierung oder Qualitätsprüfung von optischen Systemen verwenden, die in großen Stückzahlen in einem industriellen Prozess hergestellt werden.

Eine Möglichkeit für eine solche Kalibriermessung besteht darin, ein optisches Referenzsystem, bei dem die Positionen der Krümmungsmittelpunkte bekannt sind, zu vermessen. Bei diesem Referenzsystem handelt es sich vorzugsweise um ein optisches System, das im Wesentlichen identisch zu später in größerer Zahl zu vermessenden optischen Systemen ist. Die Positionen der Krümmungsmittelpunkte des Referenzsystems werden in einer anderen externen Messvorrichtung hochgenau bestimmt. Diese Positionen werden dann den Positionen zugeordnet, die von der erfindungsgemäßen Messvorrichtung als Krümmungsmittelpunkte bestimmt werden.

Alternativ oder zusätzlich können bei der Kalibriermessung die Positionen der Krümmungsmittelpunkte eines Kalibrierprüflings, bei dem die Positionen der Krümmungsmittelpunkte unbekannt sind, in mehreren azimutalen Drehstellungen des optischen Testsystems gemessen werden. Die Vermessung in mehreren Drehstellungen liefert in der an sich im Stand der Technik bekannten Weise die Position des Krümmungsmittelpunkts, die dann mit dem Ort des Reflexes auf dem Lichtsensor in Beziehung gesetzt wird. Auch hier ist es günstig, wenn es sich bei dem Kalibrierprüfling um ein optisches System handelt, das im Wesentlichen identisch zu später in größerer Zahl zu vermessenden optischen Systemen ist.

Eine weitere Möglichkeit für die Kalibriermessung besteht darin, mit einem externen Messsystem die Orte zu messen, an denen in der ersten und in der zweiten Bildebene Bilder eines von der Abbildungsoptik abgebildeten Objekts entstehen. Auf diese Weise lassen sich Abbildungsfehler der Abbildungsoptik direkt erfassen und können rechnerisch bei der Vermessung der Positionen der Krümmungsmittelpunkte berücksichtigt werden.

Um auf Verfahrbewegungen optischer Elemente der Abbildungsoptik verzichten zu können, müssen sich die erste und die zweite Bildebene an den vermuteten Positionen der Krümmungsmittelpunkte der zu vermessenden optischen Flächen liegen, wobei gegebenenfalls die brechende Wirkung von im Strahlengang vorgelagerten optischen Flächen des optischen Systems zu berücksichtigen sind. Die vermuteten Positionen der Krümmungsmittelpunkte sind dabei aus den Designdaten des zu vermessenden optischen Systems bekannt. Soll ein anderes optisches System vermessen werden, so erfordert dies in der Regel eine Anpassung der Abbildungsoptik, da sich dann die erste und die zweite Bildebene an anderen axialen Positionen befinden. Die Abbildungsoptik sollte deswegen zumindest bei solchen Messsystemen, mit denen sich eine Vielzahl unterschiedlicher optischer Systeme vermessen lassen, einstellbare optische Elemente enthalten.

Eine Möglichkeit, zwei unterschiedliche Bildebenen zu einer einzigen Objektebene zu erzeugen, besteht darin, die erste und die zweite Bildebene durch Vorsatzoptiken mit unterschiedlichen Brennweiten zu erzeugen. Die Lichtwege der Vorsatzoptiken werden durch in Lichtausbreitungsrichtung vor den Vorsatzoptiken angeordneten ersten Strahlteilern getrennt und in Lichtausbreitungsrichtung hinter den Vorsatzoptiken angeordneten Strahlkombinierern zusammengeführt. Um die Lage der Bildebenen verändern zu können, können die Vorsatzoptiken insgesamt oder Teile davon axial verschiebbar angeordnet sein.

Eine andere Möglichkeit zur Erzeugung unterschiedlicher Bildebenen besteht darin, die erste und die zweite Bildebene in unterschiedlichen und sich im Bereich eines kollimierten Strahlengangs nicht überlappenden azimutalen Segmenten einer dem Messlicht zugeordneten Messlichtapertur zu erzeugen. Solche Segmente können beispielsweise durch eine spezielle Linse erzeugt werden, die aus zwei aneinander gefügte Hälften mit unterschiedlichen Brennweiten besteht. Bei mehr als zwei unterschiedlichen Bildebenen erhöht sich die Zahl der unterschiedlichen Segmente entsprechend.

Ferner ist es möglich, die erste und die zweite Bildebene in unterschiedlichen und sich im Bereich eines kollimierten Strahlengangs nicht überlappenden radialen Segmenten einer dem Messlicht zugeordneten Messlichtapertur zu erzeugen. Die Abbildungsoptik enthält zu diesem Zweck beispielsweise eine Linse, die in einem kreisförmigen Zentralbereich eine größere Brechkraft hat als in einem umgebenden ringförmigen Außenbereich. Ein ähnlicher Effekt wird erzielt, wenn zwei Linsen mit unterschiedlichen Durchmessern dicht beabstandet angeordnet sind, so dass ein Teil des Messlichts beide Linsen und ein anderer Teil nur eine Linse durchtritt.

Bei den vorstehend beschriebenen Varianten wird das Messlicht räumlich in unterschiedliche Anteile getrennt. Als weitere Alternative wird vorgeschlagen, die erste und die zweite Bildebene für Messlicht unterschiedlicher Wellenlängen zu erzeugen, d.h. jedem Wellenlängenbereich ist eine Bildebene eindeutig zugeordnet, wodurch das Messlicht wellenlängenmäßig in unterschiedliche Anteile aufgeteilt wird. Ausgenutzt wird dabei die Dispersion von optischen Elementen. Chromatisch nicht korrigierte Linsen haben eine chromatische Längsaberration, was z.B. dazu führt, dass die Bildebenen für rotes Licht und blaues Licht unterschiedlich sind. Wird als Messlicht eine Mischung aus rotem und blauem Licht verwendet, so erhält man zwei unterschiedliche Bildebenen. Bei diesem Ansatz ist außerdem sichergestellt, dass sich die Reflexe auf dem ortsauflösenden Lichtsensor problemlos voneinander unterscheiden lassen, da die Reflexe unterschiedliche Farben haben.

Bei Linsen ist die chromatische Längsaberration aber im Allgemeinen so klein, dass nur dicht beabstandete Positionen von Krümmungsmittelpunkten gemessen werden können. Bei diffraktiven optischen Elementen hängt die Beugungswirkung im Allgemeinen sehr viel stärker von der verwendeten Wellenlänge ab. Bevorzugt enthält die Abbildungsoptik deswegen mindestens ein diffraktives optisches Element oder eine hybride Linse, worunter eine refraktive Linse mit darauf aufgebrachten diffraktiven Strukturen verstanden wird.

Im Folgenden werden Maßnahmen beschrieben, wie die Reflexe, die von unterschiedlichen Flächen auf dem Lichtsensor erzeugt werden, voneinander unterschieden werden können.

Sind die Lichtwege des Messlichts, die den unterschiedlichen Bildebenen zugeordnet sind, zumindest an einem Ort des Messlichtstrahlengangs voneinander getrennt, so lassen sich Filter in diese Lichtwege einführen, die zu einer Unterscheidbarkeit der Reflexe führen. Solche Filter können beispielsweise Farbfilter oder Polarisationsfilter sein. Anstelle von Filtern können auch schaltbare optische Elemente verwendet werden, durch die der Lichtweg unterbrochen werden kann. Auf diese Weise lässt sich sicherstellen, dass zu einem gegebenen Zeitpunkt nur das Messlicht auf das zu vermessende optische System fällt, das einer einzigen Bildebene zugeordnet ist. Anschließend wird dieses Messlicht mit den schaltbaren optischen Elementen abgeblendet und das Messlicht freigegeben, das zur Vermessung der Position des nächsten Krümmungsmittelpunkts benötigt wird, usw.

Die Reflexe lassen sich auch dann unterscheiden, wenn die Bilder eines von der Abbildungsoptik abgebildeten und in der Objektebene angeordneten Objekts auf dem Lichtsensor lateral versetzt sind. Ein solcher lateraler Versatz lässt sich beispielsweise dadurch erzeugen, dass das optische System relativ zu einer optischen Achse der Abbildungsoptik um einen Kippwinkel α verkippt angeordnet wird. Dadurch sind die Krümmungsmittelpunkte unterschiedlich weit von der optischen Achse der Abbildungsoptik entfernt. Dies führt dazu, dass auch die zugeordneten Reflexe, d.h. die Bilder eines in der Objektebene angeordneten Objekts, unterschiedlich weit von der optischen Achse der Abbildungsoptik entfernt sind und dadurch auf dem Lichtsensor lateral versetzt erscheinen.

Falls die Abbildungsoptik die mindestens eine Objektebene zusätzlich in eine dritte Bildebene abbildet, die von der ersten und der zweiten Bildebene verschieden ist, können Bilder des von der Abbildungsoptik abgebildeten Objekts auf dem Lichtsensor auch in zwei Richtungen zueinander lateral versetzt sein.

Hinsichtlich der Vorrichtung wird die eingangs genannte Aufgabe durch eine Vorrichtung zur Messung der Positionen von Krümmungsmittelpunkten optischer Flächen eines ein- oder mehrlinsigen optischen Systems gelöst, die umfasst:
a) eine Abbildungsoptik, die dazu eingerichtet ist, mindestens eine, und vorzugsweise genau eine Objektebene in eine erste und gleichzeitig eine davon verschiedene, aber sich im gleichen Strahlengang befindende zweite Bildebene abzubilden;
b) einen ortsauflösenden Lichtsensor, der dazu eingerichtet ist, Reflexe von Messlichts an optischen Flächen des optischen Systems zu erfassen,
c) eine Auswerteeinrichtung, die dazu eingerichtet ist, die tatsächliche Position eines ersten und eines zweiten Krümmungsmittelpunktes auf der Grundlage der von dem Lichtsensor erfassten Reflexe zu berechnen, nachdem das optische System derart angeordnet wurde, dass sich, unter Berücksichtigung der brechenden Wirkung einer gegebenenfalls im Strahlengang vorgelagerten optischen Fläche des optischen Systems, eine vermutete Position des ersten Krümmungsmittelpunkts in der ersten Bildebene und eine vermutete Position des zweiten Krümmungsmittelspunkts in der zweiten Bildebene der Abbildungsoptik befindet, und nachdem ein in der Objektebene angeordnetes Objekt gleichzeitig oder sequentiell auf die erste und auf die zweite Bildebene mit Hilfe von Messlicht abgebildet wurde, das von einer Seite auf das optische System fällt.

Die Auswerteeinrichtung kann dazu eingerichtet sein, bei der Berechnung der Position eine Krümmungsmittelpunkts eine innerhalb des optischen Systems liegenden optischen Fläche die gemessenen Positionen der Krümmungsmittelpunkte der zwischen dieser optischen Fläche und der Abbildungsoptik liegenden optischen Flächen rechnerisch zu berücksichtigen.

Die Abbildungsoptik kann derart ausgebildet sein, dass sie keine in axialer Richtung verfahrbaren optischen Elemente enthält.

Die Auswerteeinrichtung kann einen Datenspeicher enthalten, in dem Daten gespeichert sind, die eine Zuordnung von Positionen von Krümmungsmittelpunkten zu Orten auf dem Lichtsensor zum Gegenstand haben.

Die Reflexe können nur in einer einzigen azimutalen Winkelstellung des optischen Systems relativ zur optischen Achse des Abbildungssystems erfassbar sein.

Die Abbildungsoptik kann zwei Vorsatzoptiken mit unterschiedlichen Brennweiten umfassen, deren Lichtwege durch in Lichtausbreitungsrichtung vor den Vorsatzoptiken angeordneten ersten Strahlteilern getrennt und in Lichtausbreitungsrichtung hinter den Vorsatzoptiken angeordneten Strahlkombinierern zusammengeführt werden.

Die Abbildungsoptik kann in azimutaler Richtung Bereiche unterschiedlicher Brennweite haben.

Alternativ oder zusätzlich hierzu kann die Abbildungsoptik in radialer Richtung Bereiche unterschiedlicher Brennweite haben.

Außerdem kann die Abbildungsoptik eine multifokale diffraktive oder eine hybride Linse enthalten.

Insbesondere kommt in Betracht, eine Abbildungsoptik zu verwenden, die ein optisches Element mit chromatischer Längsaberration umfasst, wobei die Vorrichtung dazu eingerichtet ist, zur Messung der Krümmungsmittelpunkte erstes und zweites Messlicht auf das optische Element mit chromatischer Längsaberration zu richten, das sich durch die Wellenlänge voneinander unterscheidet.

Die Bilder eines von der Abbildungsoptik abgebildeten und in der Objektebene angeordneten Objekts können auf dem Lichtsensor lateral versetzt sein. Wenn die Abbildungsoptik die mindestens eine Objektebene zusätzlich in eine dritte Bildebene abbildet, die von der ersten und der zweiten Bildebene verschieden ist, so können die Bilder des von der Abbildungsoptik abgebildeten Objekts auf dem Lichtsensor in zwei Richtungen zueinander lateral versetzt sein.

Offenbart ist außerdem ein Verfahren zur Messung der Positionen von Krümmungsmittelpunkten optischer Flächen mehrerer ein- oder mehrlinsiger optischer Systeme, die im Wesentlichen gleichartig aufgebaut sind, mit den folgenden Schritten:
a) Abbilden mindestens eines Objekts in eine erste und in eine zweite Bildebene;
b) Anordnen eines Kalibrierprüflings, der zumindest im Wesentlichen gleichartig zu den optischen Systemen aufgebaut ist, derart, dass sich, unter Berücksichtigung der brechenden Wirkung einer gegebenenfalls im Strahlengang vorgelagerten optischen Fläche des optischen Systems, eine vermutete Position eines ersten Krümmungsmittelpunkts des Kalibrierprüflings in der ersten Bildebene und eine vermutete Position eines zweiten Krümmungsmittelpunkts des Kalibrierprüflings in der zweiten Bildebene befindet;
c) Erfassen der Orte, an denen Reflexe des Messlichts an optischen Flächen des Kalibrierprüflings auf mindestens einem ortsauflösenden Lichtsensor auftreffen;
d) Anordnen eines der optischen Systeme derart, dass sich, unter Berücksichtigung der brechenden Wirkung einer gegebenenfalls im Strahlengang vorgelagerten optischen Fläche des optischen Systems, eine vermutete Position eines ersten Krümmungsmittelpunkts des einen optischen Systems in der ersten Bildebene und eine vermutete Position eines zweiten Krümmungsmittelpunkts des einen optischen Systems in der zweiten Bildebene der Abbildungsoptik befindet;
e) Erfassen der Orte, an denen Reflexe des Messlichts an den optischen Flächen des einen optischen Systems auf dem mindestens einen ortsauflösenden Lichtsensor auftreffen, wobei keine weitere Erfassung von Orten, an denen Reflexe des Messlichts an den optischen Flächen des einen optischen Systems auf dem mindestens einen ortsauflösenden Lichtsensor auftreffen, in einer anderen Drehstellung des einen optischen Systems durchgeführt wird, und wobei keine optische Elemente mindestens einer Abbildungsoptik axial verfahren werden, die das mindestens eine Objekt auf die Bildebenen abbildet;
f) Bestimmen des ersten und des zweiten Krümmungsmittelpunkts des einen optischen Systems auf der Grundlage der in Schritt e) erfassten Orte und unter Berücksichtigung der in Schritt c) für den Kalibrierprüfling erfassten Orte;
g) Wiederholen der Schritte d) bis f) für ein anderes der optischen Systeme.

Dieses Verfahren beruht auf der Erkenntnis, dass man auf die üblicherweise erforderliche Vermessung des optischen Systems in mehreren azimutalen Drehstellungen verzichten kann, wenn vor der Messung der Krümmungsmittelpunkte eine Kalibriermessung unter Verwendung eines Kalibrierprüflings durchgeführt wird. Der Kalibrierprüfling ist zumindest im Wesentlichen gleichartig zu den optischen Systemen aufgebaut ist, für welche die Positionen der Krümmungsmittelpunkte eigentlich gemessen werden sollen. Unter im "Wesentlichen gleichartig" wird hier verstanden, dass die optischen Systeme das gleiche optische Design haben, sich aber voneinander infolge von Materialfehlern, Justagetoleranzen oder anderen Fertigungsfehlern geringfügig voneinander unterscheiden können. Diese Kalibriermessung liefert eine Zuordnung von Orten auf dem Lichtsensor zu tatsächlichen Positionen von Krümmungsmittelpunkten.

Dadurch lässt sich der gesamte Messvorgang extrem schnell durchführen. Das Verfahren lässt sich dadurch auch im Zusammenhang mit der Justierung oder Qualitätsprüfung von optischen Systemen verwenden, die in großen Stückzahlen in einem industriellen Prozess hergestellt werden.

Die mehreren Bildebenen können, wie oben beschrieben, von einer Abbildungsoptik bereitgestellt werden, die mindestens eine, und vorzugsweise genau eine, Objektebene in eine erste und eine davon verschiedene, aber sich im gleichen Strahlengang befindende zweite Bildebene abbildet. Es ist aber auch möglich, im Stand der Technik bekannte Messvorrichtungen zu verwenden, bei denen die Bildebenen in voneinander getrennten Strahlengängen erzeugt werden.

Eine Möglichkeit für eine Kalibriermessung besteht darin, die Positionen der Krümmungsmittelpunkte des Kalibrierprüflings mit Hilfe einer externen Messeinrichtung vorab oder nachträglich zu messen. Diesen tatsächlichen Positionen der Krümmungsmittelpunkte werden dann Orten zugeordnet, an denen auf dem mindestens einen Lichtsensor Reflexe erfasst werden.

Anstatt eine externe Messeinrichtung zu verwenden, kann die Messung der Positionen der Krümmungsmittelpunkte auch in der gleichen Messvorrichtung durchgeführt werden, die später für die Vermessung der mehreren optischen Systeme verwendet wird. Erforderlich ist hierzu lediglich, dass die Messvorrichtung über einen Drehtisch verfügt. Dann kann der Kalibrierprüfling, wie an sich im Stand der Technik bekannt, in mehreren azimutalen Drehstellungen vermessen werden. Die Orte, an denen auf dem mindestens einen Lichtsensor Reflexe entstehen, liegen dann auf einer Kreisbahn, deren Mittelpunkt mit der Drehachse des Drehtischs zusammenfällt. Der Radius des Kreises gibt den Abstand des Krümmungsmittelpunkts von der Drehachse an.

Eine weitere Möglichkeit für die Kalibriermessung besteht darin, mit einem externen Messsystem die Orte zu messen, an denen in der ersten und in der zweiten Bildebene Bilder eines von einer Abbildungsoptik abgebildeten Objekts entstehen. Auf diese lassen sich Abbildungsfehler der Abbildungsoptik direkt erfassen und können rechnerisch bei der Vermessung der Positionen der Krümmungsmittelpunkte berücksichtigt werden.

### KURZE BESCHREIBUNG DER ZEICHNUNGEN

Weitere Merkmale und Vorteile der Erfindung ergeben sich aus der nachfolgenden Beschreibung der Ausführungsbeispiele anhand der Zeichnungen. Darin zeigen:
- Figur 1: einen Meridionalschnitt durch ein mehrlinsiges optisches System, bei dem alle Linsen perfekt zu einer Referenzachse ausgerichtet sind;
- Figur 2: eine einzelne Linse aus dem in der Figur 1 gezeigten optischen System, die jedoch gegenüber der Referenzachse verkippt ist;
- Figur 3: eine schematische Darstellung der Krümmungsmittelpunkte eines mehrlinsigen optischen Systems;
- Figur 4: eine schematische Darstellung wie in der Figur 3, wobei die Krümmungsmittelpunkte jedoch auf einer von der Referenzachse verschiedenen Geraden liegen;
- Figur 5: einen Meridionalschnitt durch einen Autokollimator nach dem Stand der Technik bei der Vermessung einer exakt auf der Bezugsachse ausgerichteten Kugellinse;
- Figur 6: den Autokollimator aus der Figur 5, jedoch mit dezentrierter Kugellinse;
- Figur 7: einen Meridionalschnitt durch eine erfindungsgemäße Messvorrichtung gemäß einem ersten Ausführungsbeispiel, bei dem eine Vorsatzoptik mehrere Strahlteiler aufweist;
- Figuren 8a bis 8c: die Bilder einer Kreuzschlitzblende auf einem Lichtsensor der in der Figur 7 gezeigten Messvorrichtung;
- Figur 9: einen Meridionalschnitt durch eine erfindungsgemäße Messvorrichtung gemäß einem zweiten Ausführungsbeispiel, bei dem eine Vorsatzoptik die Messlichtapertur in mehrere azimutale Segmente unterteilt;
- Figur 10: eine Draufsicht auf eine Anordnung von segmentartigen Zoomlinsen der in der Figur 9 gezeigten Messvorrichtung;
- Figur 11: eine Draufsicht auf eine Anordnung von drei Farbfiltern der in der Figur 9 gezeigten Messvorrichtung;
- Figur 12: Bilder in unterschiedlichen Farben einer Kreuzschlitzblende auf dem Lichtsensor der in der Figur 9 gezeigten Messvorrichtung;
- Figur 13: einen Meridionalschnitt durch eine erfindungsgemäße Messvorrichtung gemäß einem dritten Ausführungsbeispiel, bei dem eine Vorsatzoptik die Messlichtapertur in mehrere radiale Ringe unterteilt;
- Figur 14: eine Draufsicht auf eine Anordnung von drei Zoomlinsen unterschiedlichen Durchmessers der in der Figur 14 gezeigten Messvorrichtung;
- Figur 15: eine Draufsicht auf eine Anordnung von drei Farbfiltern der in der Figur 13 gezeigten Messvorrichtung;
- Figur 16: einen Meridionalschnitt durch eine erfindungsgemäße Messvorrichtung gemäß einem vierten Ausführungsbeispiel, bei dem ein diffraktives optisches Element die Messlichtapertur wellenlängenabhängig in unterschiedliche und sich überlappende Teillichtwege unterteilt;
- Figur 17: einen Meridionalschnitt durch eine Abwandlung des in der Figur 16 gezeigten vierten Ausführungsbeispiels, bei dem zwei unterschiedliche Objekte getrennt, aber in einem gemeinsamen Strahlengang auf die beiden Bildebenen abgebildet werden;
- Figur 18: ein Flussdiagramm zur Erläuterung wichtiger Schritte des erfindungsgemäßen Verfahrens.

### BESCHREIBUNG BEVORZUGTER AUSFÜHRUNGSBEISPIELE

### 1. Einführung

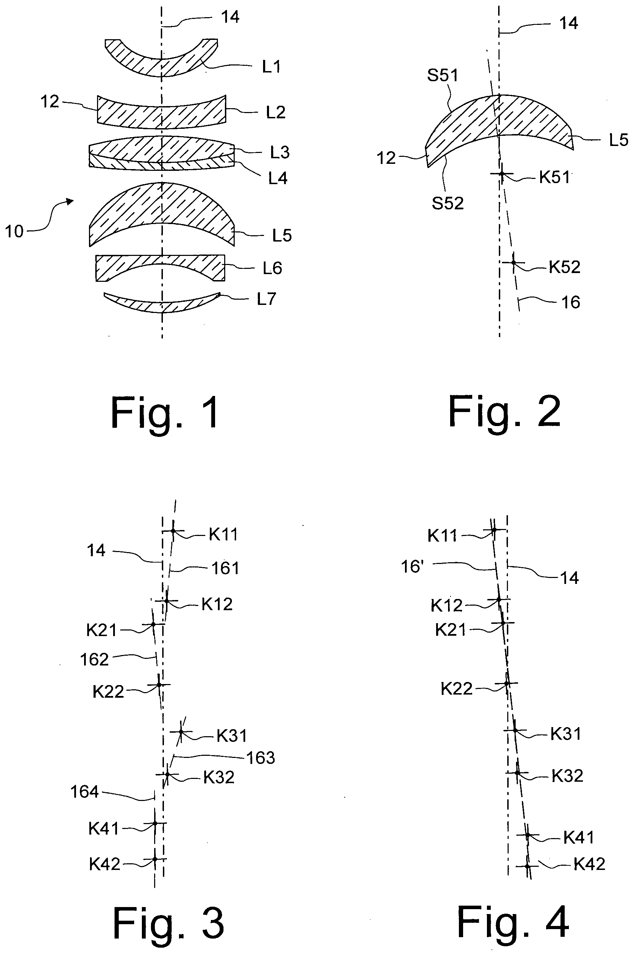

Die Figur 1 zeigt in einem Meridionalschnitt ein insgesamt mit 10 bezeichnetes optisches System, das sieben Linsen L1 bis L7 umfasst. Die beiden Linsen L3 und L4 sind dabei spaltfrei aneinandergefügt und bilden eine als Achromat verwendete Dublette. Die Linsen L1 bis L7 haben einen zylindrisch geschliffenen Linsenrand 12, der jeweils in einer nicht dargestellten Linsenfassung aufgenommen ist.

Im Idealfall sind die Linsen L1 bis L7 so ausgerichtet, dass ihre optischen Achsen alle auf einer gemeinsamen Referenzachse 14 liegen, die gleichzeitig die Symmetrieachse der zylindrischen Linsenränder ist. Die Referenzachse 14 wird dann im Allgemeinen als die optische Achse des optischen Systems 10 bezeichnet.

Bei realen optischen Systemen kommt es jedoch aufgrund von Fertigungs- und Montagetoleranzen zu Abweichungen von einer solchen idealen Ausrichtung. Die Figur 2 zeigt beispielhaft für die Linse L5, wie sich eine geringfügige (in der Figur 2 jedoch übertrieben dargestellte) Verkippung der Linse L5 in der Linsenfassung auf den Zentrierzustand auswirkt. Es sei hier angenommen, dass die beiden Linsenflächen S51 und S52 der Linse L5 sphärisch sind und Krümmungsmittelpunkte haben, die in der Figur 2 mit K51 bzw. K52 bezeichnet sind. Die Krümmungsmittelpunkte K51 und K52 legen die optische Achse der Linse L5 fest, die in der Figur 2 mit einer gestrichelten Linie 16 angedeutet ist. Infolge dieser Festlegung verläuft die optische Achse 16 stets senkrecht zu den sphärischen optischen Flächen S51, S52 der Linse L5.

Bei asphärischen Linsen ist die optische Achse durch die Krümmungsmittelpunkte des sphärischen Anteils der asphärischen Linsenflächen definiert.

Die Verkippung der Linse L5 kann beispielsweise dadurch hervorgerufen sein, dass die Linse L5 nicht korrekt in ihre Linsenfassung eingesetzt wurde. Als Ursache hierfür kommt etwa in Betracht, dass der Linsenrand 12 nicht so geschliffen wurde, dass seine Symmetrieachse mit der optischen Achse 16 der Linse L5 fluchtet.

Um die Linse L5 korrekt auf der Referenzachse 14 des optischen Systems 10 auszurichten, müsste die Linse L5 so verkippt und ggf. zusätzlich senkrecht zur Referenzachse 14 verschoben werden, dass die optische Achse 16 mit der Referenzachse 14 fluchtet, wie dies in der Figur 1 angenommen wurde.

Bei einem mehrlinsigen optischen System, wie es in der Figur 1 gezeigt ist, liegen die optischen Achsen der einzelnen Linsen im Allgemeinen je nach Qualität des Zentrierzustands mehr oder weniger unregelmäßig zur Referenzachse 14 verteilt. Dies ist beispielhaft in der Figur 3 für ein optisches System mit vier Linsen mit Krümmungsmittelpunkten K11, K12, K21, K22, K31, K32 und K41, K42 angedeutet; die optischen Achsen der vier Linsen sind mit 161, 162, 163, 164 bezeichnet. Um bei einem solchen optischen System die Zentrierung der Linsen zu verbessern, müssen mehrere Linsen verkippt und/oder translatorisch verlagert werden, damit alle optischen Achsen 161, 162, 163, 164 mit der Referenzachse 14 fluchten.

Gelegentlich kann es auch, wie die Figur 4 zeigt, vorkommen, dass zwar die optischen Achsen der Linsen (zumindest annähernd) auf einer gemeinsamen optischen Achse 16' angeordnet sind, diese jedoch nicht mit der Referenzachse 14 fluchtet. In einem solchen Fall kann es günstiger sein, die einzelnen Linsen nicht neu zu justieren, sondern das gesamte optische System so in eine übergeordnete Einheit einzubauen, dass es nicht bezüglich seiner Referenzachse 14, die z.B. durch Linsenfassungen oder ein Objektivgehäuse vorgegeben sein kann, sondern bezüglich seiner optischen Achse 16' in der übergeordneten Einheit justiert wird.

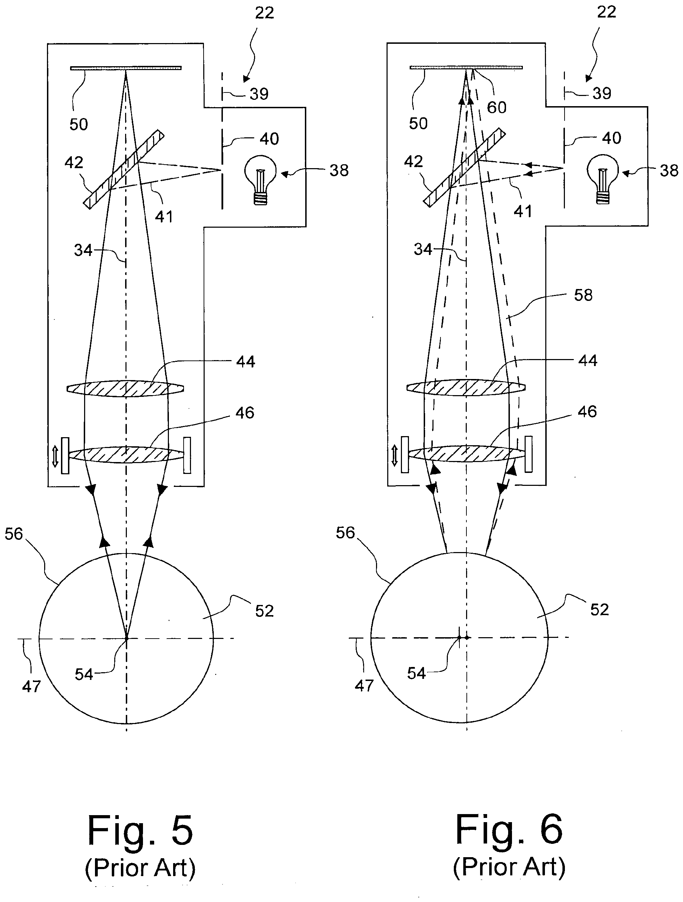

Um ggf. einzelne Linsen eines optischen Systems oder das optische System insgesamt nachjustieren zu können, aber auch zur regelmäßigen Qualitätssicherung wird eine erfindungsgemäße Messvorrichtung eingesetzt, mit der sich die Positionen der Krümmungsmittelpunkte der optischen Flächen mit hoher Genauigkeit messen lassen. Aus den Positionen der Krümmungsmittelpunkte lassen sich die Lagen der optischen Achsen der Einzellinsen und deren Abweichung von einer Referenzachse 14 bestimmen. Ferner ist es möglich, daraus abgeleitete Größen zu bestimmen, etwa die Krümmungsradien der optischen Flächen. Im folgenden Abschnitt 2 wird zunächst der Aufbau eines konventionellen Autokollimators mit Bezug auf die Figuren 5 und 6 erläutert, bevor im Abschnitt 3 auf eine erfindungsgemäße Messvorrichtung und das damit durchführbare Messverfahren eingegangen wird.

### 2. Aufbau eines Autokollimators

Der in der Figur 5 in einem Meridionalschnitt gezeigte und insgesamt mit 22 bezeichnete Autokollimator enthält eine Lichtquelle 38, die eine in einer Objektebene 39 angeordnete Kreuzschlitzblende 40 mit Messlicht 41 ausleuchtet. Das aus der Kreuzschlitzblende 40 austretende Messlicht 41 wird über einen Strahlteiler 42 auf eine Kollimatorlinse 44 gerichtet und verlässt diese als kollimiertes Strahlenbündel. Eine Zoomlinse 46, die entlang einer optischen Achse 34 des Autokollimators verfahrbar ist, bündelt das kollimierte Messlicht 41 in einer Brennebene. Da dort ein reelles Bild der Kreuzschlitzblende 40 entsteht, wird diese Brennebene im Folgenden als Bildebene 47 bezeichnet.

Auf der rückwärtigen Seite des Strahlteilers 42 ist ein Bildsensor 50 angeordnet, worunter hier ein lichtempfindlicher ortsauflösender Sensor verstanden wird. Geeignet als Bildsensor sind beispielsweise an sich bekannte CCD- oder CMOS-Sensoren.

Im Folgenden wird die Funktion des Autokollimators 22 mit Bezug auf die Figuren 5 und 6 erläutert. Das aus dem Autokollimator 22 austretende Messlicht 41 ist hier auf einen Prüfling gerichtet, bei dem es sich der Einfachheit halber um eine Kugel 52 handelt. Liegt der Mittelpunkt 54 der Kugel 52 und damit der Krümmungsmittelpunkt ihrer Oberfläche 56 exakt in der Bildebene 47 des Autokollimators 22, fällt das von dem Autokollimator 22 ausgehende Messlicht senkrecht auf die Oberfläche 56 der Kugel 52. Folglich wird das Messlicht 41 an der Oberfläche 56 der Kugel in sich zurückreflektiert, durchtritt die Zoomlinse 46, die Kollimatorlinse 44 und zu einem größeren Teil auch den Strahlteiler 42 und erzeugt auf dem Bildsensor 50 ein Bild der Kreuzschlitzblende 40. Wenn sich der Mittelpunkt 54 der Kugel 52 auf der optischen Achse 34 des Autokollimators befindet, ist das Bild der Kreuzschlitzblende 40 auf dem Bildsensor 50 ebenfalls zur optischen Achse 34 zentriert.

Die Figur 6 zeigt den Strahlengang für den Fall, dass die Kugel 52 senkrecht zur optischen Achse 34 des Autokollimators 22 verlagert wurde. Infolge dieser Verlagerung treffen die Lichtstrahlen nicht mehr senkrecht auf die Oberfläche 56 der Kugel 52 auf und werden deswegen auch nicht in sich zurückreflektiert. Das reflektierte, in der Figur 6 gestrichelt angedeutete Messlicht 41 erzeugt deswegen auf dem Bildsensor 50 ein Bild 60 der Kreuzschlitzblende 40, das zur optischen Achse 34 dezentriert ist.

Da die Dezentrierung der Kugel 52 letztlich eine Verkippung des dem Autokollimator 22 zugewandten Teils ihrer Oberfläche 56 bedeutet, misst der Autokollimator 22 letztlich den Winkel, den die Oberfläche 56 der Kugel 52 zur optischen Achse 34 einschließt. Der Autokollimator stellt deswegen im weiteren Sinne eine Winkelmesseinrichtung dar. Dementsprechend können für die nachfolgend erläuterte Messvorrichtung auch andere berührungslos arbeitende Winkelmesseinrichtungen anstelle des Autokollimators 22 eingesetzt werden.

Bei Linsen mit sphärischen Flächen funktioniert dieser Messvorgang in gleicher Weise, nur dass die Messung nicht wie bei einer Kugel die Position eines Kugelmittelpunkts, sondern die Position des Krümmungsmittelpunkts der betreffenden sphärischen Fläche ergibt. Auch der Krümmungsmittelpunkt des sphärischen Anteils asphärischer optischer Flächen lässt sich auf diese Weise vermessen.

### 3. Aufbau einer erfindungsgemäßen Messvorrichtung

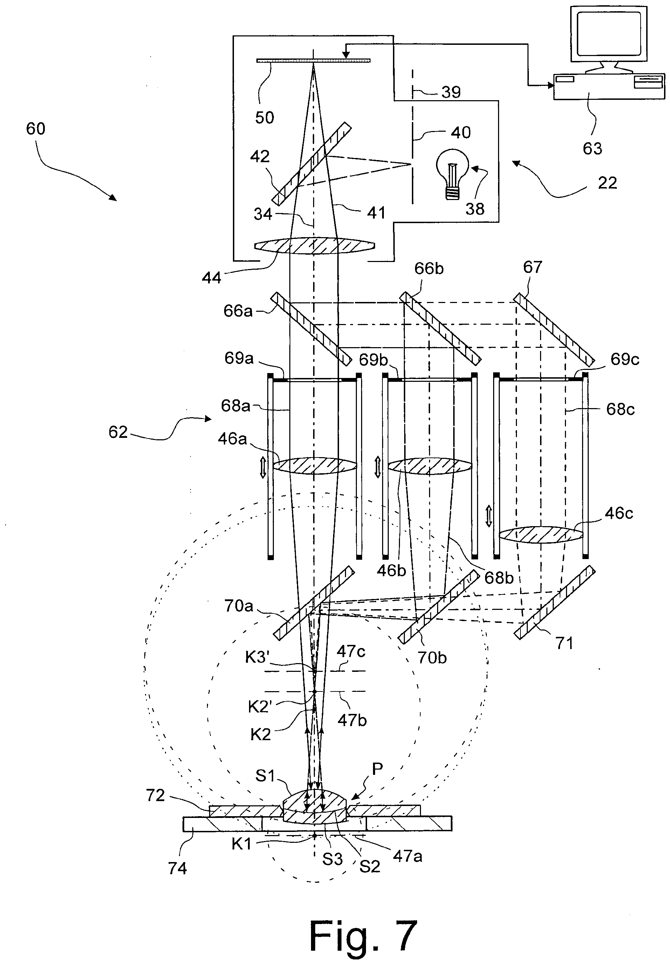

Im Folgenden wird mit Bezug auf die Figur 7 der Aufbau einer erfindungsgemäßen Messvorrichtung 60 erläutert. Die Messvorrichtung 60 umfasst eine Recheneinheit 63 und den zuvor mit Bezug auf die Figuren 5 und 6 beschriebenen Autokollimator 22, bei dem jedoch die verfahrbare Zoomlinse 46 durch eine Optik 62 ersetzt ist.

Die Optik 62 umfasst in diesem Ausführungsbeispiel einen ersten Strahlteiler 66a, einen zweiten Strahlteiler 66b und einen ersten Umlenkspiegel 67. Der erste Strahlteiler 66a teilt den Lichtweg in einen ersten Teillichtweg 68a und einen weiteren Lichtweg auf, den von dem zweiten Strahlteiler 66b in einen zweiten Teillichtweg 68b und einen dritten Teillichtweg 68c aufgeteilt wird. Der erste Umlenkspiegel 67 lenkt den dritten Teillichtweg 68c so um, dass ein Verfahrabschnitt A entsteht, in dem die drei Teillichtwege 68a, 68b und 68c parallel zueinander verlaufen. In diesem Verfahrabschnitt A sind in den Teillichtwegen 68a, 68b und 68c jeweils eine erste, eine zweite und eine dritte Zoomlinse 46a, 46b bzw. 46c verfahrbar angeordnet, wie dies durch Pfeile in der Figur 7 angedeutet ist. Die Zoomlinsen 46a, 46b und 46c übernehmen in den Teillichtwegen 68a, 68b und 68c jeweils die Funktion der Zoomlinse 46 des in den Figuren 5 und 6 gezeigten Autokollimators 22. Außerdem sind im Bereich des Verfahrabschnitts A eine erste Verschlussblende 69a, eine zweite Verschlussblende 69b und eine dritte Verschlussblende 69c in den Teillichtwegen 68a, 68b bzw. 68c angeordnet. Die Verschlussblenden 69a, 69b und 69c können z.B. als Schlitzblenden oder LCD-Blenden ausgebildet sein und sollten die Eigenschaft haben, den betreffenden Teillichtweg 68a, 68b bzw. 68c schnell vollständig verschließen oder vollständig öffnen zu können.

Die Optik 62 umfasst ferner einen zweiten Strahlkombinierer 70b, der den zweiten und den durch einen weiteren Umlenkspiegel 71 umgelenkten dritten Teillichtweg 68c zu einem Lichtweg kombiniert, und einen ersten Strahlkombinierer 70a, der diesen Lichtweg mit dem ersten Teillichtweg 68a kombiniert und dadurch zu einem gemeinsamen Lichtweg überlagert. Durch diese Überlagerung der Teillichtwege 68a, 68b und 68c erzeugt die Optik 62 gleichzeitig eine erste Bildebene 47a, die vom Messlicht 41 im ersten Teillichtweg 68a erzeugt wird, eine zweite Bildebene 47b, die vom Messlicht 41 in dem zweiten Teillichtweg 68b erzeugt wird, und eine dritte Bildebene 47c, die vom Messlicht 41 in dem dritten Teillichtweg 68c erzeugt wird. Die drei Bildebenen 47a, 47b und 47c sind axial hintereinander angeordnet, wodurch man drei entsprechend axial gestaffelte Bilder der Kreuzschlitzblende 40 erhält.

Der erste Strahlteiler 66a, die erste Verschlussblende 69a, die erste Zoomlinse 46a und der Strahlkombinierer 70a bilden gemeinsam eine Vorsatzoptik 62a. Entsprechendes gilt für die optischen Elemente in den anderen beiden Teillichtwegen 68b und 68c.

Befinden sich alle Zoomlinsen 46a, 46b und 46c auf gleicher Höhe, so ist der Abstand den Bildebenen 47a und 47b ungefähr gleich dem axialen Abstand zwischen dem ersten und dem zweiten Strahlkombinierer 70a bzw. 70b. Entsprechend ist der Abstand zwischen den Bildebenen 47b und 47c ungefähr gleich dem axialen Abstand zwischen dem zweiten Strahlkombinierer 70b und dem zweiten Umlenkspiegel 71. Durch individuelles axiales Verfahren der Zoomlinsen 46a, 46b und 46c können die Bildebenen 47a, 47b bzw. 47c innerhalb eines Bereichs, der durch die Länge des möglichen Verfahrweges der Zoomlinsen 46a, 46b und 46c im Verfahrabschnitt A vorgegeben ist, verlagert werden.

Teil der erfindungsgemäßen Messvorrichtung ist außerdem eine Prüflingsaufnahme 72, die auf einem Haltering 74 befestigt ist. Im dargestellten Ausführungsbeispiel handelt es sich bei dem Prüfling P um eine Doublette mit zwei miteinander verkitteten Linsen. Der Prüfling hat folglich drei optische Flächen S1, S2 und S3 mit Krümmungsmittelpunkten K1, K2 bzw. K3.

### 4. Messverfahren

Im Folgenden wird das erfindungsgemäße Messverfahren näher erläutert.

### a) Kalibrierung

Vor der ersten Messung sollte die Messvorrichtung 60 kalibriert werden, da im Allgemeinen nur dann höchste Messgenauigkeiten erzielbar sind.

Bei der Kalibriermessung wird in die Prüflingsaufnahme 72 ein Kalibrierprüfling eingesetzt, dessen Krümmungsmittelpunkt genau bekannt ist. Der Kalibrierprüfling kann hierzu z.B. durch eine externe Messvorrichtung vermessen worden sein. Vorzugsweise handelt es sich bei dem Kalibrierprüfling um ein optisches System vom gleichen Typ wie jenes, das später in größerer Zahl vermessen werden soll. Dieser Kalibrierprüfling wird in der nachfolgend unter b) beschriebenen Weise in der Messvorrichtung 60 vermessen. Die so erhaltenen Messwerte werden dann mit den bekannten Krümmungsmittelpunkten korreliert.

Auf diese Weise erhält man Kalibrierwerte, mit denen spätere Messwerte an realen Prüflingen korrigiert werden können, um Material- oder Justagefehlern der optischen Elemente und der Prüflingsaufnahme 56 der Messvorrichtung 60 Rechnungen tragen zu können.

Darüber hinaus ist es möglich, für die Kalibriermessung einen Kalibrierprüfling zu verwenden, bei dem die Positionen der Krümmungsmittelpunkte der optischen Flächen nicht hochgenau in einer externen Messvorrichtung, sondern in der Messvorrichtung 60 bestimmt werden. Hierzu wird der Kalibrierprüfling mit dem unbekannten Krümmungsmittelpunkt mit Hilfe der Messvorrichtung 60 in mehreren unterschiedlichen azimutalen Drehstellungen vermessen. Die Messvorrichtung 60 muss zu diesem Zweck anstelle des festen Halterings 74 einen Drehteller aufweisen, der um eine Drehachse drehbar ist, die vorzugsweise annähernd mit der optischen Achse 34 des Autokollimators 22 zusammenfällt. Die Position des Krümmungsmittelpunkts lässt sich dann aus dem Mittelpunkt der Kreisbahn ableiten, auf der das Bild der Kreuzschlitzblende 40 auf dem Bildsensor 50 während der Drehung des Kalibrierprüflings um die optische Achse 34 wandert. Bei der Vermessung realer Prüflinge wird nur in jeweils einer Drehstellung des Drehtellers gemessen. Die so erhaltenen Messergebnisse werden dann wie weiter oben beschrieben unter Verwendung der Kalibrierwerte korrigiert.

### b) Messen der Positionen der Krümmungsmittelpunkte

Um bei dem mehrlinsigen Prüfling P die Positionen der Krümmungsmittelpunkte K1, K2 und K3 der optischen Flächen S1, S2, S3 zu messen, müssen mehrere Messvorgänge nacheinander durchgeführt werden. Begonnen wird dabei z. B. mit derjenigen optischen Fläche, die dem Autokollimator 22 am nächsten liegt. Bei dieser Fläche handelt es sich, wie in der Figur 7 erkennbar ist, um die Fläche S1. Der Krümmungsmittelpunkt K1 der Fläche S1 ist am weitesten von der Optik 62 entfernt. Deswegen wird für diese Teilmessung Messlicht 41 verwendet, das den ersten Teillichtweg 68a nimmt, denn diesem ist der Bereich mit den längsten Brennweiten zugeordnet. Hierzu werden die erste Verschlussblende 69a geöffnet und die beiden anderen Verschlussblenden 69b, 69c geschlossen.

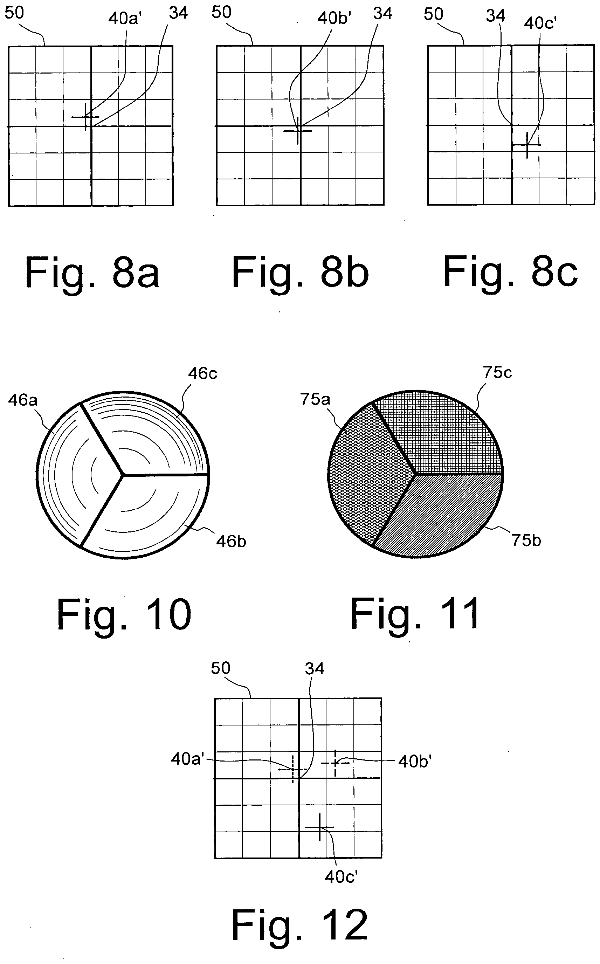

Die erste Zoomlinse 46a der Vorsatzoptik 62a ist vor der Kalibriermessung vorzugsweise bereits so verfahren worden, dass die erste Bildebene 47a in der Nähe des auf der Grundlage der Designdaten erwarteten Krümmungsmittelpunkts K1 liegt. Das in der Figur 7 mit durchgezogenen Linien angedeutete Messlicht 41 aus dem ersten Teillichtweg 68a trifft dann senkrecht auf die Fläche S1 auf und wird in sich zurück reflektiert. Nun wird der Ort des Bildes 40a' der Kreuzschlitzblende 40 auf dem Lichtsensor 50 erfasst, wie dies die Figur 8a illustriert. Aus diesem Ort wird, unter Berücksichtigung der zuvor gespeicherten Kalibrierwerte, die Position des Krümmungsmittelpunkts K1 bestimmt und in einem Datenspeicher der Auswerteeinrichtung 63 gespeichert.

In einem zweiten Schritt wird die Position des Krümmungsmittelpunkts K2 der zweiten Fläche S2 gemessen. Der Krümmungsmittelpunkt K2 der Fläche S2 liegt zwischen den Krümmungsmittelpunkten K1 und K3 der Flächen S1 bzw. S3. Deswegen wird für diesen Messschritt Messlicht 41 verwendet, das den zweiten Teillichtweg 68b nimmt, denn diesem ist der Bereich mit den mittleren Brennweiten zugeordnet. Hierzu werden die zweite Verschlussblenden 69b geöffnet und die beiden anderen Verschlussblenden 69a und 69c geschlossen. Dieses Messlicht ist in der Figur 7 mit lang gestrichelten Lichtstrahlen angedeutet.

Die zweite Zoomlinse 46b der Vorsatzoptik 62b ist vor der Kalibriermessung vorzugsweise bereits so verfahren worden, dass die zweite Bildebene 47b in der Nähe des auf der Grundlage der Designdaten erwarteten Krümmungsmittelpunkts K2 liegt. Die brechende Wirkung der ersten Fläche S1 des Prüflings P ist dabei bereits berücksichtigt. Denn würde tatsächlich im Krümmungsmittelpunkt K2 der Fläche S2 ein Bild der Kreuzschlitzblende 40 entstehen, so träfe das Messlicht 41 infolge der Brechung an der im Lichtweg vorausliegenden ersten Fläche S1 nicht senkrecht auf die Fläche S2 auf. Die brechende Wirkung der ersten Fläche S1 ist deswegen bei der Festlegung der Bildebene 47b, in die die Kreuzschlitzblende 40 bei diesem zweiten Messvorgang abgebildet wird, rechnerisch so zu berücksichtigen, dass das Messlicht 41 senkrecht auf die zweite Fläche S2 fällt, wie dies die Figur 7 zeigt. Anders ausgedrückt wird die Bildebene 47b nicht dort angeordnet, wo sich der Krümmungsmittelpunkt K2 der zweiten Fläche S2 tatsächlich befindet, sondern dort, wo er von der zweiten Fläche S2 aus gesehen erscheint, wenn man durch die optische Fläche S1 den Krümmungsmittelpunkt K2 betrachtet. Nun wird der Ort des Bildes 40b' der Kreuzschlitzblende 40 auf dem Lichtsensor 50 erfasst, wie dies die Figur 8b illustriert. Aus diesem Ort wird, unter Berücksichtigung der zuvor gespeicherten Kalibrierwerte, die Position des Krümmungsmittelpunkts K2 bestimmt und in einem Datenspeicher der Auswerteeinrichtung 63 gespeichert.

Die Position des Krümmungsmittelpunkts K3 der dritten Fläche S3 wird in gleicher Weise gemessen. Hierzu wird Messlicht 41 verwendet, das ausschließlich den dritten Teillichtweg 68c durchsetzt hat. Bei der Einstellung der dritten Zoomlinse 46c wurde nicht nur die brechende Wirkung der ersten Fläche S1, sondern auch der zweiten Fläche S2 rechnerisch zu berücksichtigt, weswegen auch hier nicht der tatsächliche Krümmungsmittelpunkt, sondern nur ein scheinbarer Krümmungsmittelpunkt K3' in der Bildebene 47c liegt. Aus dem in der Figur 8c gezeigten Ort des Bildes 40c' der Kreuzschlitzblende 40 auf dem Lichtsensor 50 wird unter Berücksichtigung der zuvor gespeicherten Kalibrierwerte die Position des Krümmungsmittelpunkts K3 bestimmt und in einem Datenspeicher der Auswerteeinrichtung 63 gespeichert.

Selbstverständlich kann die Reihenfolge der vorstehend beschriebenen Schritte auch beliebig vertauscht werden, da für die Durchführung eines Messschritts nicht die Ergebnisse eines anderen Messschritts benötigt werden. Die Wirkung der jeweils im Strahlengang vorgelagerten optischen Flächen kann auch am Ende rechnerisch berücksichtigt werden. Die Messvorrichtung 60 misst somit letztlich für die nachgelagerten optischen Flächen nicht die realen, sondern nur die scheinbaren Positionen der Krümmungsmittelpunkte.

Da die Verschlussblenden 69a, 69b und 69c sehr schnell schaltbar sind, können die drei vorstehend beschriebenen Messschritte in sehr kurzer Zeit, zum Beispiel innerhalb von weniger als einer Sekunde, durchgeführt werden. Auf diese Weise lassen sich die Positionen der Krümmungsmittelpunkte K1, K2 und K3 sehr rasch messen, sofern die Bildebenen 47a, 47b und 47c mit Hilfe der Zoomlinsen 46a, 46b bzw. 46c vorher an die richtigen axialen Positionen gebracht wurden. Dieser schnelle Messvorgang ist insbesondere dann vorteilhaft, wenn die nächste Messaufgabe darin besteht, einen gleichartigen Prüfling P' zu vermessen, der im Prinzip die gleichen Designdaten wie Brechzahlen, Abmessungen und Krümmungsradien hat, die Krümmungsmittelpunkte aber infolge von Fertigungstoleranzen an etwas anderen Positionen liegen können. Der Prüfling P' wird dann lediglich gegen den Prüfling P ausgetauscht. Der nachfolgende Messvorgang kann dann ohne jegliche Verfahrbewegungen von Zoomlinsen oder anderen Komponenten durchgeführt werden, wenn man von den Schließvorgängen der Verschlussblenden 69a, 69b, 69c absieht. Erfolgt der Austausch der Prüflinge mit Hilfe eines Roboterarms, so kann die für die vollständige Messung der Positionen der Krümmungsmittelpunkte benötigte Messzeit in der Größenordnung von wenigen Sekunden liegen.

### 5. Alternative Ausführungsbeispiele

### a) Azimutale Teilung der Messlichtapertur

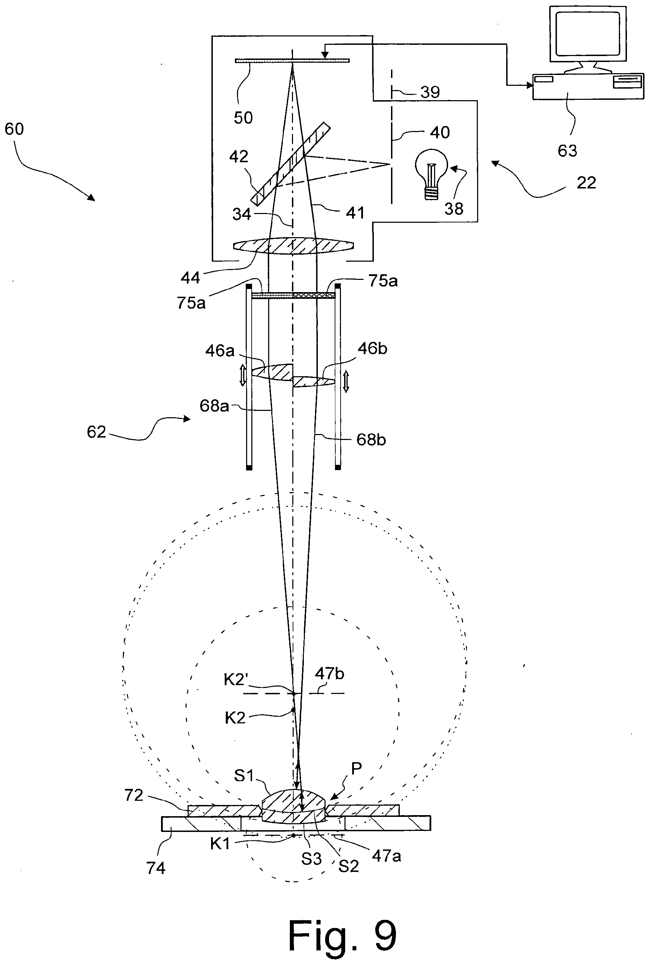

Die Figur 9 zeigt ein anderes Ausführungsbeispiel einer erfindungsgemäßen Messvorrichtung in einer an die Figur 7 angelehnten Darstellung.

Die gesamte Apertur des Messlichts 41 ist bei diesem Ausführungsbeispiel in drei Kreissegmente von jeweils 120° unterteilt. Jedes dieser Kreissegmente legt einen Teillichtweg fest und enthält eine axial verfahrbare Zoomlinse 46a, 46b bzw. 46c. Die Figur 10 zeigt eine Draufsicht auf die drei Zoomlinsen 46a, 46b und 46c. Diese sind nicht rotationssymmetrisch, sondern bestehen jeweils nur aus einem Linsensegment mit einem Azimutwinkel von 120°. Zu einer vollständigen Apertur von 360° ergänzt wären die Zoomlinsen 46a, 46b und 46c jedoch jeweils rotationssymmetrisch.

Die Brennweiten der Zoomlinsen 46a, 46b, 46c sind verschieden. Außerdem lassen sich die Zoomlinsen 46a, 46b, 46c unabhängig voneinander entlang der optischen Achse 34 verfahren, wie dies in der Figur 9 durch Doppelpfeile angedeutet ist. Die zweite Zoomlinse 46b ist in dieser Darstellung nicht erkennbar, da sie sich ausschließlich in der dem Betrachter zugewandten Hälfte der im Schnitt dargestellten Messvorrichtung 60 befindet.

Mit Hilfe der drei kreissegmentartigen Zoomlinsen 46a, 46b, 46c lassen sich wie bei dem vorstehend beschriebenen Ausführungsbeispiel gleichzeitig drei unterschiedliche Bildebenen 47a, 47b bzw. 47c erzeugen, die sich in der Nähe der tatsächlichen oder der unter Berücksichtigung der Brechung vorgelagerter Flächen scheinbaren Positionen der Krümmungsmittelpunkte befinden.

Bei diesem Ausführungsbeispiel gibt es keine Verschlussblenden 69a, 69b, 69c. Die Bilder der Kreuzschlitzblende 40, die durch die Reflexe an den optischen Flächen S1, S2 und S3 des Prüflings P auf dem Lichtsensor 50 entstehen, erscheinen deswegen stets gleichzeitig. Um die Bilder voneinander unterscheiden und den Krümmungsmittelpunkten K1, K2 und K3 des Prüflings P zuordnen zu können, sind im kollimierten Strahlengang der Vorsatzoptiken 62a, 62b, 62c drei Farbfilter 75a, 75b bzw. 75c angeordnet, die jeweils die Form eines Kreissegmentes haben, wie dies die Figur 11 in einer Draufsicht illustriert. Die Farbfilter 75a, 75b, 75c sind dabei so orientiert, dass auf die Zoomlinsen 46a, 46b und 46c stets nur Licht einer bestimmten Farbe (d.h. eines bestimmten Wellenlängenbereichs) fällt. Dadurch unterscheiden sich auch die auf dem Lichtsensor 50 erzeugten Bilder 40a', 40b' und 40c' der Kreuzschlitzblende 40 in ihrer Farbe und können so leicht voneinander unterschieden werden, wie dies die Figur 12 illustriert.

### b) Radiale Teilung der Messlichtapertur

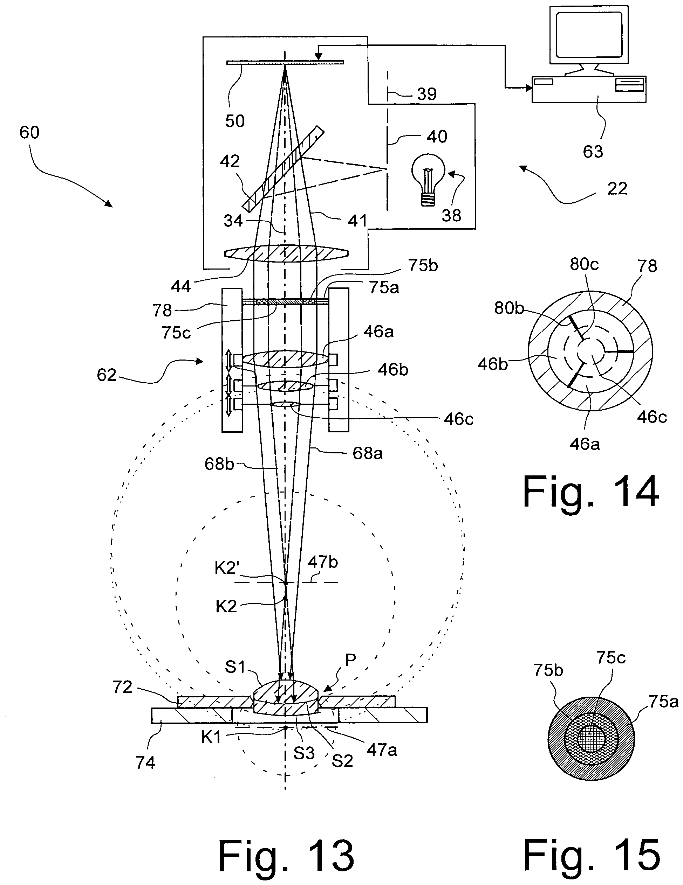

Die Figur 13 zeigt in einer an die Figuren 7 und 9 angelehnten Darstellung eine Messvorrichtung gemäß einem weiteren Ausführungsbeispiel der Erfindung.

Auch hier werden unterschiedliche Teillichtwege 68a, 68b und 68c erzeugt, denen unterschiedliche Bildebenen 47a, 47b zugeordnet sind; in der Figur 13 ist der Teillichtweg 68c und die diesem zugeordnete Bildebene 47c der besseren Übersichtlichkeit halber nicht dargestellt. Anders als bei dem in der Figur 9 gezeigten Ausführungsbeispiel werden die Teillichtwege 68a, 68b und 68c jedoch nicht durch eine azimutale Unterteilung der Messlichtapertur, sondern durch eine radiale Unterteilung erzeugt.

Zu diesem Zweck sind in der Vorsatzoptik 62 drei Linsen hintereinander angeordnet, deren Durchmesser stark voneinander abweichen. Die Durchmesser sind dabei so ausgelegt, dass ein Teil des Messlichts 41 ausschließlich die erste Zoomlinse 46a, ein zweiter Teil des Messlichts 41 ausschließlich die erste Zoomlinse 46a und die zweite Zoomlinse 46b und ein dritter Teil des Messlichts 41 alle drei Zoomlinsen 46a, 46b und 46c durchtritt. Die drei Zoomlinsen 46a, 46b und 46c sind individuell verfahrbar, wie dies in der Figur 13 durch Doppelpfeile angedeutet ist. In einem Gehäuse 78 der Vorsatzoptik 62 sind die beiden kleineren Zoomlinsen 46b und 46c von dünnen Stäben 80b bzw. 80c gehalten, wie dies die Figur 14 in einer Draufsicht zeigt. Die Stäbe 80b, 80c sind so dünn, dass sie nur einen vernachlässigbaren Teil des Messlichts 41 am Durchtritt durch die Vorsatzoptik 62 hindern.

Bei diesem Ausführungsbeispiel werden somit die Bildebenen 47a, 47b und die nicht dargestellte Bildebene 47c von unterschiedlichen und sich im Bereich der Bildebenen nicht überlappenden radialen Segmenten der Apertur des Messlichts 41 erzeugt.

Entsprechend sind auch die Farbfilter 75a, 75b und 75c bei diesem Ausführungsbeispiel nicht in Kreissegmente unterteilt, sondern haben die Form von konzentrischen Ringen oder - im Falle des dritten Farbfilters 75c - einer Kreisscheibe. Diese Anordnung der Farbfilter 75a, 75b und 75c im kollimierten Strahlengang des Messlichts 41 stellt sicher, dass das Messlicht, das in den drei Bildebenen 47a, 47b und 47c fokussiert wird, unterschiedliche Farben hat. Dadurch können auch hier die Bilder der Kreuzschlichtblende 40 auf dem Lichtsensor 50 farblich voneinander unterschieden werden.

### c) Diffraktives optisches Element

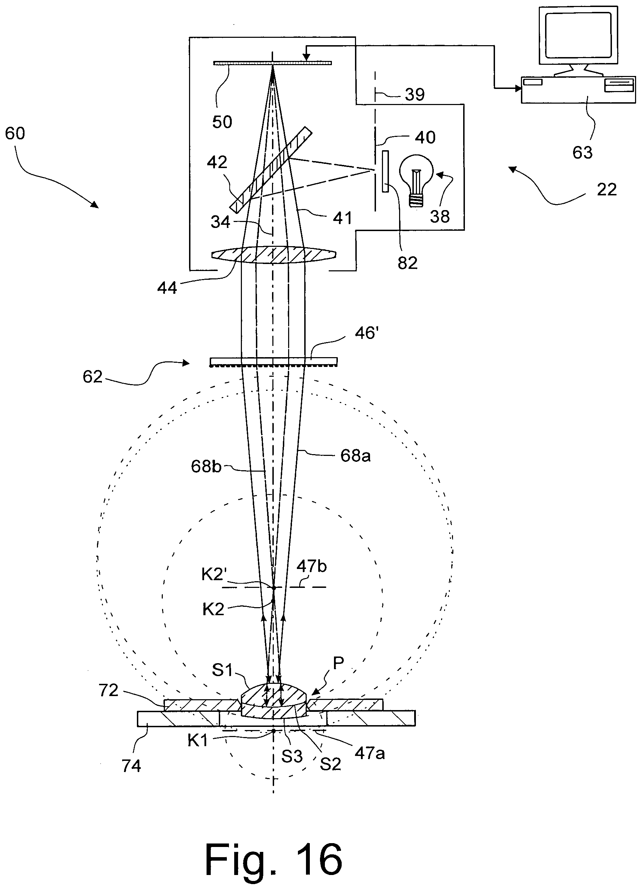

Die Figur 16 zeigt in einer an die Figuren 7, 9 und 13 angelehnten Darstellung eine erfindungsgemäße Messvorrichtung gemäß einem anderen Ausführungsbeispiel, bei dem die Vorsatzoptik 62 ein diffraktives optisches Element 46' aufweist. Außerdem befindet sich im Strahlengang des Messlichts 41, z.B. zwischen der Lichtquelle 38 und der Kreuzschlitzblende 40, ein Farbfilter 82, das lediglich für drei schmale und sich vorzugsweise nicht überlappende Wellenlängenbereiche lichtdurchlässig ist. Im Folgenden wird angenommen, dass diese Wellenlängenbereiche sich im sichtbaren Spektrum befinden, weswegen sie im Folgenden als Farben bezeichnet werden.

Das diffraktive optische Element 46' ist so ausgelegt, dass es das auftreffende kollimierte Licht in Abhängigkeit von der Farbe in unterschiedlichen Brennebenen fokussiert, von denen in der Figur 16 die Brennebenen 47a und 47b gezeigt sind. Ähnlich wie bei einer refraktiven Linse mit chromatischer Längsaberration entstehen auf diese Weise gleichzeitig unterschiedliche Brennebenen für unterschiedliche Farben. Auch hier lassen sich die Bilder der Kreuzschlitzblende 40 auf dem Bildsensor 50 leicht anhand der unterschiedlichen Farben voneinander unterscheiden.

Durch Verfahren des diffraktiven optischen Elements 46' entlang der optischen Achse 34 können die Bildebenen 47a, 47b und 47c gemeinsam in axialer Richtung verfahren werden. Eine individuelle und voneinander unabhängige Einstellung der Bildebenen 47a, 47b, 47c ist bei diesem Ausführungsbeispiel nur durch Austausch gegen ein Farbfilter möglich, das für andere Wellenlängenbereiche durchlässig ist. Im Gegensatz zu den anderen Ausführungsbeispielen lassen sich jedoch mit Hilfe des diffraktiven optischen Elements 46' mit sehr geringem Aufwand und ohne Lichtverluste unterschiedlich viele Bildebenen erzeugen, weil lediglich das Farbfilter 82 und/oder das diffraktive optische Element 46' ausgetauscht werden müssen. Auf diese Weise kann die Messvorrichtung 60 leicht zwischen einem Betriebsmodus, in der nur die Positionen von z.B. zwei bestimmten Krümmungsmittelpunkten vermessen werden sollen, in einen Betriebsmodus überführen, in der beispielsweise zehn Krümmungsmittelpunkte gleichzeitig gemessen werden sollen.

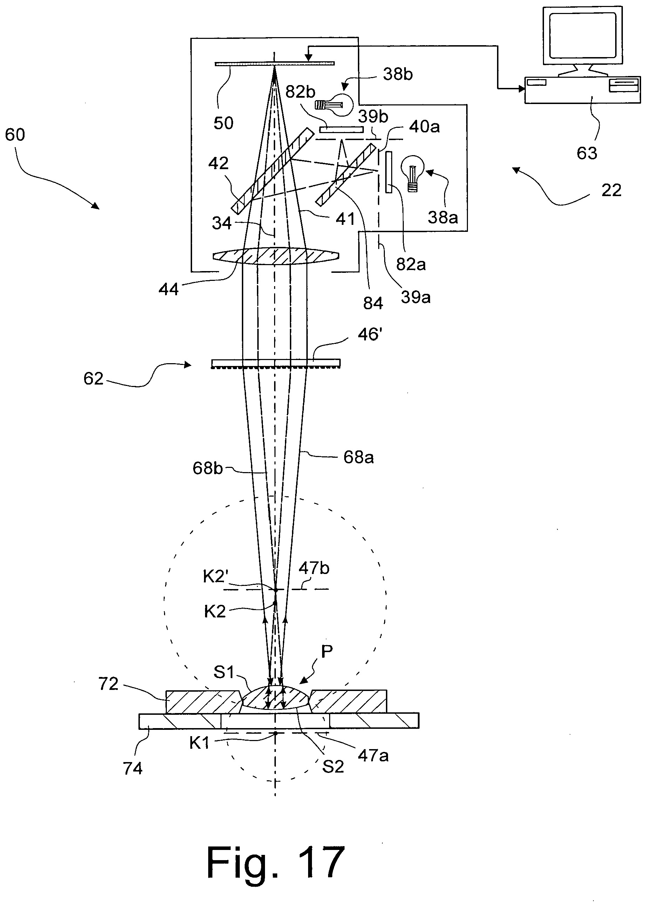

Die Figur 17 zeigt ein abgewandeltes Ausführungsbeispiel, bei dem der Lichtweg vor dem Strahlteiler 42 mit Hilfe eines zweiten Strahlteilers 84 in zwei Teillichtwege aufgeteilt ist. In einem ersten Teillichtweg beleuchtet eine erste Lichtquelle 38a über ein erstes Wellenlängenfilter 82a, das nur für Licht einer Farbe durchlässig ist, eine erste Kreuzschlitzblende 40a. In einem zweiten Teillichtweg beleuchtet eine zweite Lichtquelle 38b über ein zweites Wellenlängenfilter 82b, das nur für Licht einer anderen Farbe durchlässig ist, eine zweite Kreuzschlitzblende 40b. Jeder Brennebene 47a, 47b ist damit genau ein Wellenlängenfilter 82a bzw. 82b zugeordnet. Dadurch können die Brennebenen noch leichter durch Austausch einzelner Wellenlängenfilter individuell verlagert werden.

Da bei diesem Ausführungsbeispiel die beiden Blenden 40a, 40b in unterschiedlichen Objektebenen 39a bzw. 39b angeordnet sind, können Blenden mit unterschiedlich geformten Blendenöffnungen verwendet werden. Die Bilder der Blenden auf dem Lichtsensor 50 lassen sich dann nicht nur über ihre Farben, sondern auch über ihre Form voneinander unterscheiden. Folglich lässt sich bei diesem Ausführungsbeispiel auch ein farbunempfindlicher Lichtsensor 50 verwenden.

Bei dem dargestellten Ausführungsbeispiel hat der Prüfling P nur zwei optische Flächen S1 und S2. Falls Prüflinge mit mehr als zwei optischen Flächen vermessen werden sollen, können wie bei dem in der Figur 16 gezeigten Ausführungsbeispiel Farbfilter verwendet werden, die für mehrere sich nicht überlappende Wellenlängenbereiche durchlässig sind.

### 5. Wichtige Verfahrensschritte

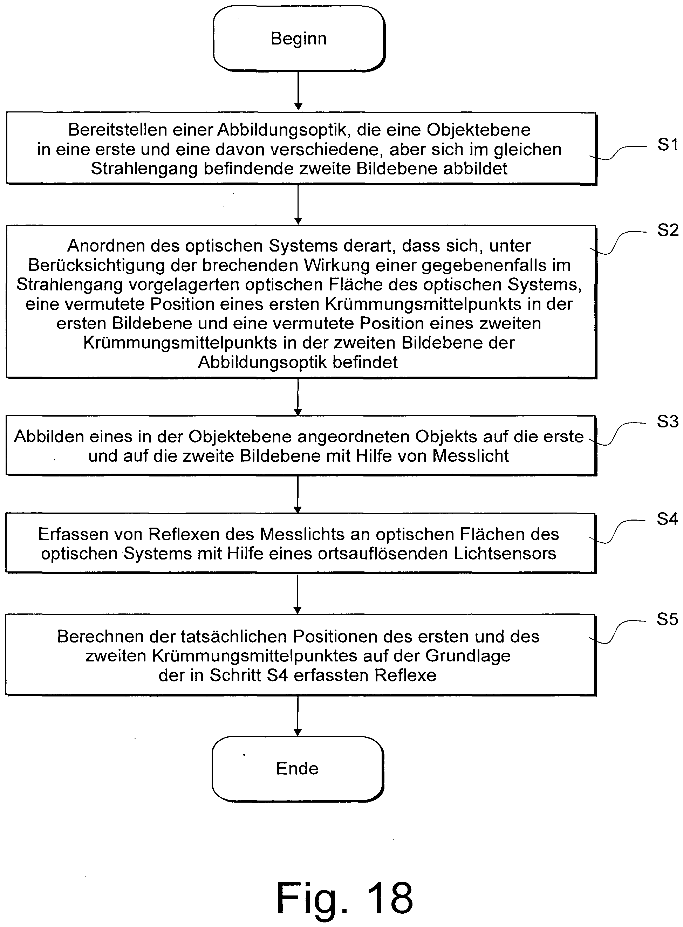

Wichtige Schritte des erfindungsgemäßen Verfahrens werden im Folgenden mit Bezug auf das in der Figur 18 gezeigte Flussdiagramm erläutert.

In einem ersten Schritt S1 wird eine Abbildungsoptik bereitgestellt, die mindestens eine Objektebene in eine erste und davon verschiedene zweite Objektebene abbildet.

In einem zweiten Schritt S2 wird das optische System derart angeordnet, dass sich unter Berücksichtigung der brechenden Wirkung einer gegebenenfalls im Strahlengang vorgelagerten optischen Fläche des optischen Systems eine vermutete Position eines ersten Krümmungsmittelpunkts in der ersten Bildebene und eine vermutete Position eines zweiten Krümmungsmittelpunkts in einer zweiten Bildebene der Abbildungsoptik befindet.

In einem dritten Schritt S3 wird ein in der Objektebene angeordnetes Objekt auf die erste und auf die zweite Bildebene mit Hilfe von Messlicht abgebildet.

In einem vierten Schritt S4 werden Reflexe des Messlichts an optischen Flächen des optischen Systems mit Hilfe eines ortsauflösenden Lichtsensors erfasst.

In einem fünften Schritt S5 werden die tatsächlichen Positionen des ersten und des zweiten Krümmungsmittelpunktes auf der Grundlage der im vierten Schritt S4 erfassten Reflexe berechnet.

## Patentansprüche

1. Verfahren zur Messung der Positionen von Krümmungsmittelpunkten (K1, K2, K3) optischer Flächen (S1, S2, S3) eines ein- oder mehrlinsigen optischen Systems (P), umfassend die folgenden Schritte:
a) Bereitstellen einer Abbildungsoptik (44, 62), die mindestens eine Objektebene (39; 39a, 39b) in eine erste Bildebene (47a) und gleichzeitig eine davon verschiedene, aber sich im gleichen Strahlengang befindende zweite Bildebene (47b) abbildet;
b) Anordnen des optischen Systems derart, dass sich, unter Berücksichtigung der brechenden Wirkung einer gegebenenfalls im Strahlengang vorgelagerten optischen Fläche (S1, S2) des optischen Systems, eine vermutete Position eines ersten Krümmungsmittelpunkts (K1) in der ersten Bildebene (47a) und eine vermutete Position (K2) eines zweiten Krümmungsmittelpunkts (K2') in der zweiten Bildebene (47b) der Abbildungsoptik befindet;
c) Gleichzeitiges oder sequentielles Abbilden eines in der Objektebene (39; 39a, 39b) angeordneten Objekts (40; 40a, 40b) auf die erste Bildebene (47a) und auf die zweite Bildebene (47b) mit Hilfe von Messlicht (41), das von einer Seite auf das optische System (P) fällt;
d) Erfassen von Reflexen des Messlichts (41) an optischen Flächen (S1, S2, S3) des optischen Systems (P) mit Hilfe eines ortsauflösenden Lichtsensors (50);
e) Berechnen der tatsächlichen Positionen des ersten Krümmungsmittelpunktes (K1) und des zweiten Krümmungsmittelpunktes (K2) auf der Grundlage der in Schritt d) erfassten Reflexe.

2. Verfahren nach Anspruch 1, **dadurch gekennzeichnet, dass** vor der Messung der Krümmungsmittelpunkte (K1, K2, K3) eine Kalibriermessung durchgeführt wird, aus der eine Zuordnung von Orten auf dem Lichtsensor (50) zu Krümmungsmittelpunkten abgeleitet wird.

3. Verfahren nach einem der vorhergehenden Ansprüche,
**dadurch gekennzeichnet, dass** die erste Bildebene (47a) und die zweite Bildebene (47b) durch Vorsatzoptiken (62a, 62b) mit unterschiedlichen Brennweiten erzeugt werden, deren Lichtwege (68a, 68b) durch in Lichtausbreitungsrichtung vor den Vorsatzoptiken angeordneten ersten Strahlteilern (66a, 66b) getrennt und in Lichtausbreitungsrichtung hinter den Vorsatzoptiken angeordneten Strahlkombinierern (70a, 70b) zusammengeführt werden.

4. Verfahren nach einem der vorhergehenden Ansprüche,
**dadurch gekennzeichnet, dass** die erste Bildebene (47a) und die zweite Bildebene (47b) in unterschiedlichen und sich im Bereich eines kollimierten Strahlengangs nicht überlappenden azimutalen Segmenten einer dem Messlicht (41) zugeordneten Messlichtapertur erzeugt werden.

5. Verfahren nach einem der vorhergehenden Ansprüche,
**dadurch gekennzeichnet, dass** die erste Bildebene (47a) und die zweite Bildebene (47b) in unterschiedlichen und sich im Bereich eines kollimierten Strahlengangs nicht überlappenden radialen Segmenten einer dem Messlicht (41) zugeordneten Messlichtapertur erzeugt werden.

6. Verfahren nach einem der vorhergehenden Ansprüche,
**dadurch gekennzeichnet, dass** die erste Bildebene (41a) und die zweite Bildebene (41b) für Messlicht (41) unterschiedlicher Wellenlängen erzeugt werden.

7. Vorrichtung zur Messung der Positionen von Krümmungsmittelpunkten (K1, K2, K3) optischer Flächen (S1, S2, S3) eines ein- oder mehrlinsigen optischen Systems (P), umfassend:
a) eine Abbildungsoptik (44, 62), die dazu eingerichtet ist, mindestens eine Objektebene (39; 39a, 39b) in eine erste Bildebene (47a) und gleichzeitig eine davon verschiedene, aber sich im gleichen Strahlengang befindende zweite Bildebene (47b) abzubilden;
b) einen ortsauflösenden Lichtsensor (50), der dazu eingerichtet ist, Reflexe von Messlicht (41) an optischen Flächen des optischen Systems zu erfassen,
c) eine Auswerteeinrichtung (63), die dazu eingerichtet ist, die tatsächliche Position eines ersten Krümmungsmittelpunktes (K1) und eines zweiten Krümmungsmittelpunktes (K2) auf der Grundlage der von dem Lichtsensor (50) erfassten Reflexe zu berechnen, nachdem das optische System (p) derart angeordnet wurde, dass sich, unter Berücksichtigung der brechenden Wirkung einer gegebenenfalls im Strahlengang vorgelagerten optischen Fläche (S1, S2) des optischen Systems (P), eine vermutete Position des ersten Krümmungsmittelpunkts (K1) in der ersten Bildebene und eine vermutete Position des zweiten Krümmungsmittelspunkts (K2') in der zweiten Bildebene der Abbildungsoptik (44, 62) befindet, und nachdem ein in der Objektebene (39; 39a, 39b) angeordnetes Objekt (40; 40a, 40b) gleichzeitig oder sequentiell auf die erste und auf die zweite Bildebene (47a, 47b) mit Hilfe von Messlicht (41) abgebildet wurde, das von einer Seite auf das optische System (P) fällt.

8. Vorrichtung nach Anspruch 7, **dadurch gekennzeichnet, dass** die Abbildungsoptik (44, 62) keine in axialer Richtung verfahrbaren optischen Elemente enthält.

9. Vorrichtung nach Anspruch 7 oder 8, **dadurch gekennzeichnet, dass** die Auswerteeinrichtung (63) einen Datenspeicher enthält, in dem Daten gespeichert sind, die eine Zuordnung von Positionen von Krümmungsmittelpunkten (K1, K2, K3) zu Orten auf dem Lichtsensor (50) zum Gegenstand haben.

10. Vorrichtung nach Anspruch 9, **dadurch gekennzeichnet, dass** die Reflexe nur in einer einzigen azimutalen Winkelstellung des optischen Systems (P) relativ zu einer optischen Achse (34) des Abbildungssystems (44, 62) erfassbar sind.

11. Vorrichtung nach einem der Ansprüche 7 bis 10, **dadurch gekennzeichnet, dass** die Abbildungsoptik zwei Vorsatzoptiken (62a, 62b) mit unterschiedlichen Brennweiten umfasst, deren Lichtwege (68a, 68b) durch in Lichtausbreitungsrichtung vor den Vorsatzoptiken angeordneten ersten Strahlteilern (66a, 66b) getrennt und in Lichtausbreitungsrichtung hinter den Vorsatzoptiken angeordneten Strahlkombinierern (70a, 70b) zusammengeführt werden.

12. Vorrichtung nach einem der Ansprüche 7 bis 11, **dadurch gekennzeichnet, dass** die Abbildungsoptik in azimutaler Richtung Bereiche unterschiedlicher Brennweite hat.

13. Vorrichtung nach einem der Ansprüche 7 bis 12, **dadurch gekennzeichnet, dass** die Abbildungsoptik (62) in radialer Richtung Bereiche unterschiedlicher Brennweite hat.

14. Vorrichtung nach Anspruch 7 bis 13, **dadurch gekennzeichnet, dass** die Abbildungsoptik eine multifokale diffraktive oder eine hybride Linse enthält.

15. Vorrichtung nach einem der Ansprüche 7 bis 14, **dadurch gekennzeichnet, dass** die Abbildungsoptik mindestens ein optisches Element (46') mit chromatischer Längsaberration umfasst, und dass die Vorrichtung dazu eingerichtet ist, zur Messung der Krümmungsmittelpunkte erstes und zweites Messlicht auf das optische Element (46') mit chromatischer Längsaberration zu richten, das sich durch die Wellenlänge voneinander unterscheidet.

## Claims

1. Method for measuring the positions of centres of curvature (K1, K2, K3) of optical surfaces (S1, S2, S3) of a single- or multi-lens optical system (P), comprising the following steps:
a) providing an optical imaging unit (44, 62) which images at least one object plane (39; 39a, 39b) into a first image plane (47a) and simultaneously a second image plane (47b) which is different from the first image plane (47a) but is situated in the same beam path;
b) arranging the optical system such that, taking into consideration the refractive effect of any optical surface (S1, S2) of the optical system potentially situated upstream in the beam path, a presumed position of a first centre of curvature (K1) is located in the first image plane (47a) of the optical imaging unit and a presumed position (K2) of a second centre of curvature (K2') is located in the second image plane (47b) of the optical imaging unit;
c) simultaneously or sequentially imaging an object (40; 40a, 40b) arranged in the object plane (39; 39a, 39b) onto the first image plane (47a) and onto the second image plane (47b) by means of measuring light (41) which is incident on the optical system (P) from one side;
d) detecting reflections of the measuring light (41) at optical surfaces (S1, S2, S3) of the optical system (P) by means of a spatially resolving light sensor (50);
e) calculating the actual positions of the first centre of curvature (K1) and of the second centre of curvature (K2) on the basis of the reflections detected in step d).

2. Method according to claim 1, **characterised in that**, before the centres of curvature (K1, K2, K3) are measured, a calibration measurement is conducted, from which an association of locations on the light sensor (50) with centres of curvature is derived.

3. Method according to any one of the preceding claims, **characterised in that** the first image plane (47a) and the second image plane (47b) are produced by auxiliary optical units (62a, 62b) with different focal lengths, the light paths (68a, 68b) of which are separated by first beam splitters (66a, 66b) arranged before the auxiliary optical units in the light propagation direction and are merged by beam combiners (70a, 70b) arranged after the auxiliary optical units in the light propagation direction.

4. Method according to any one of the preceding claims, **characterised in that** the first image plane (47a) and the second image plane (47b) are produced in different azimuthal segments of a measuring light aperture associated with the measuring light (41), whereby the azimuthal segments do not overlap in the region of a collimated beam path.

5. Method according to any one of the preceding claims, **characterised in that** the first image plane (47a) and the second image plane (47b) are produced in different radial segments of a measuring light aperture associated with the measuring light (41), whereby the radial segments do not overlap in the region of a collimated beam path.

6. Method according to any one of the preceding claims, **characterised in that** the first image plane (41a) and the second image plane (41b) are produced for measuring light (41) of different wavelengths.

7. Device for measuring the positions of centres of curvature (K1, K2, K3) of optical surfaces (S1, S2, S3) of a single- or multi-lens optical system (P), comprising:
a) an optical imaging unit (44, 62) which is configured to image at least one object plane (39; 39a, 39b) into a first image plane (47a) and simultaneously a second image plane (47b) which is different from the first image plane (47a) but is situated in the same beam path;
b) a spatially resolving light sensor (50) which is configured to detect reflections of measuring light (41) at optical surfaces of the optical system;
c) an evaluation device (63) which is configured to calculate the actual position of a first centre of curvature (K1) and of a second centre of curvature (K2) on the basis of the reflections detected by the light sensor (50), after the optical system (p) has been arranged such that, taking into consideration the refractive effect of any optical surface (S1, S2) of the optical system (P) potentially situated upstream in the beam path, a presumed position of the first centre of curvature (K1) is located in the first image plane of the optical imaging unit (44, 62) and a presumed position of the second centre of curvature (K2') is located in the second image plane of the optical imaging unit (44, 62), and after an object (40; 40a, 40b) arranged in the object plane (39; 39a, 39b) has simultaneously or sequentially been imaged onto the first and onto the second image plane (47a, 47b) by means of measuring light (41) which is incident onto the optical system (P) from one side.

8. Device according to claim 7, **characterised in that** the optical imaging unit (44, 62) does not comprise optical elements which are traversable in axial direction.

9. Device according to claim 7 or 8, **characterised in that** the evaluation device (63) comprises a data storage in which data is stored relating to an association of positions of centres of curvature (K1, K2, K3) with locations on the light sensor (50) .

10. Device according to claim 9, **characterised in that** the reflections are detectable only in a single azimuthal angular position of the optical system (P) relative to an optical axis (34) of the imaging system (44, 62).

11. Device according to any one of claims 7 to 10, **characterised in that** the optical imaging unit comprises two auxiliary optical units (62a, 62b) with different focal lengths, the light paths (68a, 68b) of which are separated by first beam splitters (66a, 66b) arranged before the auxiliary optical units in the light propagation direction and merged by beam combiners (70a, 70b) arranged after the auxiliary optical units in the light propagation direction.

12. Device according to any one of claims 7 to 11, **characterised in that** the optical imaging unit has regions of different focal length in azimuthal direction.

13. Device according to any one of claims 7 to 12, **characterised in that** the optical imaging unit has regions of different focal length in radial direction.

14. Device according to any one of claims 7 to 13, **characterised in that** the optical imaging unit comprises a multi-focal diffractive or a hybrid lens.

15. Device according to any one of claims 7 to 14, **characterised in that** the optical imaging unit comprises at least one optical element with longitudinal chromatic aberration, and **in that** the device is configured to measure the centres of curvature by directing first and second measuring light onto the optical element (46') with longitudinal chromatic aberration, which differ from each other by wavelength.

## Revendications

1. Procédé de mesure des positions de centres de courbure (K1, K2, K3) de surfaces optiques (S1, S2, S3) d'un système optique à une ou plusieurs lentilles (P), comprenant les étapes suivantes :
a) mise à disposition d'une optique de reproduction (44, 62) qui reproduit au moins un plan objet (39 ; 39a, 39b) dans un premier plan image (47a) et en même temps un deuxième plan image (47b) différent de celui-ci mais se trouvant sur la même trajectoire de faisceau ;
b) disposition du système optique de telle sorte que, compte tenu de l'effet réfringent d'une surface optique (S1, S2) du système optique éventuellement située en amont sur la trajectoire de faisceau, une position présumée d'un premier centre de courbure (K1) se trouve dans le premier plan image (47a) et une position présumée (K2) d'un deuxième centre de courbure (K2') dans le deuxième plan image (47b) de l'optique de reproduction ;
c) reproduction simultanée ou séquentielle d'un objet (40 ; 40a, 40b) disposé dans le plan objet (39 ; 39a, 39b) sur le premier plan image (47a) et sur le deuxième plan image (47b) à l'aide d'une lumière de mesure (41) qui arrive d'un côté sur le système optique (P) ;
d) détection de réflexions de la lumière de mesure (41) sur des surfaces optiques (S1, S2, S3) du système optique (P) à l'aide d'un capteur de lumière à résolution spatiale (50) ;
e) calcul des positions effectives du premier centre de courbure (K1) et du deuxième centre de courbure (K2) sur la base des réflexions détectées à l'étape d).

2. Procédé selon la revendication 1, **caractérisé en ce qu'**avant la mesure des centres de courbure (K1, K2, K3), on effectue une mesure d'étalonnage de laquelle on déduit une affectation de lieux sur le capteur de lumière (50) à des centres de courbure.

3. Procédé selon l'une des revendications précédentes, **caractérisé en ce que** le premier plan image (47a) et le deuxième plan image (47b) sont produits par des optiques additionnelles (62a, 62b) de distances focales différentes, dont les trajets optiques (68a, 68b) sont séparés par des premiers diviseurs de faisceau (66a, 66b) disposés avant les optiques additionnelles dans la direction de propagation de la lumière et réunis par des combinateurs de faisceaux (70a, 70b) disposés derrière les optiques additionnelles dans la direction de propagation de la lumière.

4. Procédé selon l'une des revendications précédentes, **caractérisé en ce que** le premier plan image (47a) et le deuxième plan image (47b) sont produits dans des segments azimutaux différents et ne se recouvrant pas dans la zone d'une trajectoire de faisceau collimatée d'une ouverture de lumière de mesure associée à la lumière de mesure (41).

5. Procédé selon l'une des revendications précédentes, **caractérisé en ce que** le premier plan image (47a) et le deuxième plan image (47b) sont produits dans des segments radiaux différents et ne se recouvrant pas dans la zone d'une trajectoire de faisceau collimatée d'une ouverture de lumière de mesure associée à la lumière de mesure (41).

6. Procédé selon l'une des revendications précédentes, **caractérisé en ce que** le premier plan image (41a) et le deuxième plan image (41b) sont produits pour une lumière de mesure (41) de longueurs d'onde différentes.

7. Dispositif de mesure des positions de centres de courbure (K1, K2, K3) de surfaces optiques (S1, S2, S3) d'un système optique à une ou plusieurs lentilles (P), comprenant :
a) une optique de reproduction (44, 62) qui est conçue pour reproduire au moins un plan objet (39 ; 39a, 39b) dans un premier plan image (47a) et en même temps un deuxième plan image (47b) différent de celui-ci mais se trouvant sur la même trajectoire de faisceau ;
b) un capteur de lumière à résolution spatiale (50) qui est conçu pour détecter les réflexions d'une lumière de mesure (41) sur des surfaces optiques du système optique,
c) un dispositif d'évaluation (63) qui est conçu pour calculer la position effective d'un premier centre de courbure (K1) et d'un deuxième centre de courbure (K2) sur la base des réflexions détectées par le capteur de lumière (50), après que le système optique (p) a été disposé de telle sorte que, compte tenu de l'effet réfringent d'une surface optique (S1, S2) du système optique (P) éventuellement située en amont sur la trajectoire de faisceau, une position présumée du premier centre de courbure (K1) se trouve dans le premier plan image et une position présumée du deuxième centre de courbure (K2') dans le deuxième plan image de l'optique de reproduction (44, 66), et après qu'un objet (40 ; 40a, 40b) disposé dans le plan objet (39 ; 39a, 39b) a été reproduit simultanément ou séquentiellement sur le premier et sur le deuxième plan image (47a, 47b) à l'aide d'une lumière de mesure (41) qui arrive d'un côté sur le système optique (P).

8. Dispositif selon la revendication 7, **caractérisé en ce que** l'optique de reproduction (44, 62) ne contient aucun élément optique déplaçable dans la direction axiale.

9. Dispositif selon la revendication 7 ou 8, **caractérisé en ce que** le dispositif d'évaluation (63) contient une mémoire de données dans laquelle sont mémorisées des données qui ont pour objet une affectation de positions de centres de courbure (K1, K2, K3) à des lieux sur le capteur de lumière (50).

10. Dispositif selon la revendication 9, **caractérisé en ce que** les réflexions ne sont détectables que dans une seule position angulaire azimutale du système optique (P) par rapport à un axe optique (34) du système de reproduction (44, 62).

11. Dispositif selon l'une des revendications 7 à 10, **caractérisé en ce que** l'optique de reproduction comprend deux optiques additionnelles (62a, 62b) ayant des distances focales différentes, dont les trajets optiques (68a, 68b) sont séparés par des premiers diviseurs de faisceau (66a, 66b) disposés avant les optiques additionnelles dans la direction de propagation de la lumière et réunis par des combinateurs de faisceaux (70a, 70b) disposés derrière les optiques additionnelles dans la direction de propagation de la lumière.

12. Dispositif selon l'une des revendications 7 à 11, **caractérisé en ce que** l'optique de reproduction possède des zones de distance focale différente dans la direction azimutale.

13. Dispositif selon l'une des revendications 7 à 12, **caractérisé en ce que** l'optique de reproduction (62) possède des zones de distance focale différente dans la direction radiale.

14. Dispositif selon l'une des revendications 7 à 13, **caractérisé en ce que** l'optique de reproduction contient une lentille multifocale diffractive ou une lentille hybride.

15. Dispositif selon l'une des revendications 7 à 14, **caractérisé en ce que** l'optique de reproduction comprend au moins un élément optique (46') à aberration chromatique longitudinale, et que le dispositif est conçu, pour la mesure des centres de courbure, pour diriger sur l'élément optique (46') à aberration chromatique longitudinale une première et une deuxième lumière de mesure qui diffèrent l'une de l'autre par la longueur d'onde.
